# EUROPÄISCHE PATENTSCHRIFT

(11) **EP 1 250 363 B1**
(45) Veröffentlichungstag und Bekanntmachung des Hinweises auf die Patenterteilung: **30.08.2006**
(21) Anmeldenummer: 00991248.6
(22) Anmeldetag: 21.12.2000
(51) Int. Cl.: C08F 10/00, C08F 4/643, C07F 5/02

(54) **CHEMISCHE VERBINDUNG, VERFAHREN ZU DEREN HERSTELLUNG UND DEREN VERWENDUNG IN KATALYSATORSYSTEMEN ZUR HERSTELLUNG VON POLYOLEFINEN**
CHEMICAL COMPOUND, METHOD FOR THE PRODUCTION THEREOF AND ITS USE IN CATALYST SYSTEMS FOR PRODUCING POLYOLEFINS
COMPOSE CHIMIQUE, PROCEDE PERMETTANT DE LE PREPARER ET DE L'UTILISER DANS DES SYSTEMES CATALYSEURS POUR PRODUIRE DES POLYOLEFINES

(30) Priorität: 23.12.1999 DE 19962910
(43) Veröffentlichungstag der Anmeldung: 23.10.2002
(73) Patentinhaber: Basell Polyolefine GmbH, 50389 Wesseling (DE)
(72) Erfinder: SCHOTTEK, Jörg, 60486 Frankfurt (DE); GREGORIUS, Heike, 56288 Bubach (DE); FISCHER, David, 67725 Breunigweiler (DE); KÜLLMER Iris, 65929 Frankfurt (DE)
(86) Internationale Anmeldenummer: PCT/EP2000/013096
(87) Internationale Veröffentlichungsnummer: WO 2001/048035

(56) Entgegenhaltungen:
- EP-A- 0 710 663
- EP-A- 0 768 320
- WO-A-00/59961
- WO-A-91/09882
- WO-A-93/11172
- WO-A-96/27439
- WO-A-97/35893
- WO-A-98/43983
- WO-A-99/41289
- WO-A-99/45047
- DATABASE WPI Section Ch, Week 200001 Derwent Publications Ltd., London, GB; Class A17, AN 2000-007006 XP002169005 & JP 11 286491 A (IDEMITSU PETROCHEM CO LTD), 19. Oktober 1999 (1999-10-19)
- DATABASE WPI Section Ch, Week 199349 Derwent Publications Ltd., London, GB; Class A14, AN 1993-392692 XP002169006 & JP 05 295030 A (MITSUBISHI PETROCHEMICAL CO LTD), 9. November 1993 (1993-11-09)
- DATABASE CHEMABS [Online] CHEMICAL ABSTRACTS SERVICE, COLUMBUS, OHIO, US; MAEHAMA, SEIJI ET AL: "Interaction between cationic zirconium alkyl complexes and fluorine-substituted BPh4 anions in ion-pair metallocene catalyst systems" retrieved from STN Database accession no. 121:301421 XP002169004 & KOBUNSHI RONBUNSHU (1994), 51(10), 670-5 ,
- BOCHMANN, MANFRED ET AL: "Cationic titanium alkyls as alkene polymerization catalysts: solvent and anion dependence" J. ORGANOMET. CHEM. (1992), 424(2), C5-C7 , XP001002274
- VANDEBERG, JOHN T. ET AL: "Tetraarylborates. III. Preparation and reagent properties of sodium tetrakis(p-trifluoromethylphenyl)borate and sodium tetrakis(m-fluorophenyl)borate" ANAL. CHIM. ACTA (1969), 44(1), 175-83 , XP000197070
- CASEY, CHARLES P. ET AL: "Measurement of Barriers for Alkene Dissociation and for Inversion at Zirconium in a d0 Zirconium-Alkyl-Alkene Complex" ORGANOMETALLICS (2000), 19(19), 3970-3977 , XP000993118

## Beschreibung

Die vorliegende Erfindung betrifft chemische Verbindungen, die ionisch aufgebaut sind und in Kombination mit einer Organometallübergangsverbindung ein Katalysatorsystem bilden, welches vorteilhaft zur Polymerisation von Olefinen eingesetzt werden kaum.

Ziegler Typ Katalysatoren auf der Basis gewinkelter Metallocene mit Metallen der 4 Nebengruppe bilden eine neue Generation industriell einsetzbarer Katalysatoren zur Polymerisation von α-Olefinen (H.H. Brintzinger, D. Fischer, R. Mülhaupt, R. Rieger, R. Waymouth, Angew. Chem. 1995, 107, 1255-1283).

Um ein aktives Katalysatorsystem zu erhalten, wird der Metallocenkomplex mit einem großen Überschuß an Methylaluminiumoxan (MAO) behandelt (H. Sinn, W. Kaminsky, Adv. Organomet. Chem., 1980, 18, 99). Dies hat neben den hohen Co-Katalysatorkosten den Nachteil eines hohen Aluminiumanteils im erhaltenen Polymer. Deshalb wurden neue Aktivierungsmethoden, die ohne überstöchiometrische Menge an Aktivator auskommen, entwickelt.

Die Synthese von "Kationen-ähnlichen" Metallocen-Polymerisationskatalysatoren, wird im J. Am. Chem. Soc. 1991, 113, 3623 beschrieben. Darin erfolgt die Alkylabstraktion von einer Metallocenalkylverbindung mittels Trispentafluorphenylboran, die stöchiometrisch zum Metallocen eingesetzt wird.

In EP-A-0,427,697 wird dieses Syntheseprinzip und ein entsprechendes Katalysatorsystem, bestehend aus einer neutralen Metallocenspezies (z.B. Cp₂ZrMe₂), einer Lewis-Säure (z.B. B(C₆F₅)₃) und Aluminiumalkylen beansprucht. Ein Verfahren zur Herstellung von Salzen der allgemeinen Form LMX⁺ XA⁻ nach dem oben beschriebenen Prinzip wird in EP-A-0,520,732 beansprucht.

EP-A-0,558,158 beschreibt zwitterionische Katalysatorsysteme, die aus Metallocendialkyl-Verbindungen und Salzen der Form [R₃NH]⁺[BPh₄]⁻ dargestellt werden. Die Umsetzung eines solchen Salzes mit z.B. Cp₂*ZrMe₂ liefert durch Protolyse unter Methanabspaltung intermediär ein Zirkonocenmethyl-Kation. Dieses reagiert über C-H-Aktivierung zum Zwitterion Cp₂*Zr⁺-(m-C₆H₄)-BPh₃- ab. Das Zr-Atom ist dabei kovalent an ein Kohlenstoffatom des Phenylringes gebunden und wird über eine agostische Wasserstoffbindung stabilisiert.

In US-A-5,348,299 werden entsprechende Systeme beansprucht, wobei Dimethylaniliniumsalze mit perfluorierten Tetraphenylboraten verwendet werden.

Neben der aktivierenden Wirkung der Borat-Salze übt ihre Ligandensphäre eine wichtige Funktion auf das Reaktionsgleichgewicht aus. Große sperrige Liganden verhindern weitgehend die Dimerisierung der Metalloceniumfragmente und drängen somit die Gleichgewichtslage auf die Seite der katalytisch aktiven Spezies. Die bislang beschriebenen einkernigen Borat-Anionen sind durch vier Aryl-Liganden charakterisiert, und können durch den Einbau von sperrigen Gruppen am Liganden Einfluß auf das Reaktionsgleichgewicht nehmen (WO 95/24268). Nachteile dieser Systeme sind die aufwendigen Synthesen, sowie die extreme Empfindlichkeit der resultierenden Metallocenium-Komplexe.

Hinzu kommt, daß die meisten Ausgangsstoffe im Verdacht stehen krebserregend, erbgutverändernd oder extrem toxisch zu sein. Dieses kann für die resultierenden Produkte nicht ausgeschlossen werden. Die zum Teil extreme Unlöslichkeit der bisher beschriebenen Ammonium-Tetraphenylborate führt zudem nur zu sehr unvollständig umgesetzten Katalysatorsystemen. Dieses hat unmittelbare Auswirkungen auf die Produktivitäten der Katalysatorsysteme im Vergleich zur eingesetzten Menge an Metallocen und Cokatalysator. Dieses wichtige Kriterium führt zu hohen Kosten und somit zu einer nur begrenzten wirtschaftlichen Nutzung.

Die WO 97/35893 beschreibt hochlösliche Aktivatoren für Olefinpolymerisationskatalysatoren, die sich insbesondere für Lösungspolymerisationsverfahren eignen. Systeme, die für Lösungspolymerisationsverfahren besonders gut geeignet sind, eignen sich jedoch aufgrund der guten Löslichkeit der Komponenten in der Regel nicht für Trägerkatalysatoren.

Die Aufgabe der vorliegenden Erfindung bestand somit darin, als Aktivatoren für Katalysatorsysteme zur Herstellung von Polyolefinen wirkende chemische Verbindungen bereitzustellen, die die oben beschriebenen Nachteile nicht aufweisen und insbesondere nicht gesundheitsbedenklich sind und eine ausreichende Löslichkeit im Trägerungsverfahren besitzen, jedoch nicht so löslich sind, daß der Trägerkatalysator im Polymerisationsprozeß Aktivkomponente verliert.

Demgemäß wurde eine chemische Verbindung der Formel I gefunden, 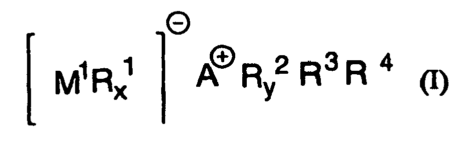 worin
- M¹: Bor,
- x: 4,
- y: 2 und
- A: Stickstoff ist
- R¹: gleich oder verschieden ist und C₆-C₄₀-Halogenaryl, C₆-C₄₀-Aryloxy, C₇-C₄₀-Arylalkyl, C₇-C₄₀-Halogenarylalkyl, C₇-C₄₀-Halogenalkylaryl oder C₄-C₄₀-Cycloalkyl bedeutet,
- R²: gleich oder verschieden ist und C₁-C₆-Alkyl bedeutet,
- R³: für C₃-C₉-Cycloalkyl, das mit C₁-C₂₀-Alkyl, insbesondere C₁-C₅-Alkyl, C₁-C₂₀-Halogenalkyl, C₁-C₁₀-Alkoxy, C₆-C₄₀-Halogenaryl, C₇-C₄₀-Alkylaryl, C₇-C₄₀-Arylalkyl, C₇-C₄₀-Halogenarylalkyl oder C₇-C₄₀-Halogenalkylaryl substituiert sein kann, oder C₇-C₂₀-Alkylaryl steht und
- R⁴: ein Wasserstoffatom ist.

Besonders bevorzugte aber nicht limitierende Beispiele für die erfindungsgemäße chemische Verbindung der Formeln (I) und (II) sind:
N,N-Dimethylcyclohexylammoniumtetrakis(pentafluororphenyl)borat,
N,N-DimethylcyclohexylammoniumTetrakis(2,3,4,6 tetrafluorophenyl)borat,
N,N-Dimethylcyclohexylammoniumtetrakis(2,3,5,6 tetrafluorophenyl)borat,
N,N-Dimethylcyclohexylammoniumtetrakis(2,3,5 trifluorophenyl)borat,
N,N-Dimethylcyclohexylammoniumtetrakis(2,3,6 trifluorophenyl)borat,
N,N-Dimethylcyclohexylammoniumtetrakis(1,3 difluorophenyl)borat,
N,N-Dimethylcyclohexylammoniumtetrakis(2,3,5,6 tetrafluoro-4-methylphenyl)borat,
N,N-Dimethylcyclohexylammoniumtetrakis(2,3,4,6 tetrafluoro-5-methylphenyl)borat,
N,N-Dimethylcyclohexylammoniumtetrakis(2,3,5 trifluorophenyl)borat,
N,N-Dimethylcyclohexylammoniumtetrakis(2,4,5 trifluoro-6-methylphenyl) borat,
N,N-Dimethylcyclohexylammoniumtetrakis(2,3,6 trifluoro-4-methylphenyl)borat,
N,N-Dimethylcyclohexylammoniumtetrakis(2,4,6 trifluoro-3-methylphenyl) borat,
N,N-Dimethylcyclohexylammoniumtetrakis(2,6 difluoro-3-methylphenyl)borat,
N,N-Dimethylcyclohexylammoniumtetrakis(2,4 difluoro-5-methylphenyl)borat,
N,N-Dimethylcyclohexylammoniumtetrakis(3,5 difluoro-2-methylphenyl) borat,
N,N-Dimethylcyclohexylammoniumtetrakis(4-methoxy-2,3,5,6 tetrafluorophenyl)borat,
N,N-Dimethylcyclohexylammoniumtetrakis(3-methoxy-2,4,5,6 tetrafluorophenyl)borat,
N,N-Dimethylcyclohexylammoniumtetrakis(2-methoxy-3,4,5,6 tetrafluorophenyl)borat,
N,N-Diethylcyclohexylammoniumtetrakis(pentafluorophenyl) borat,
N,N-Diethylcyclohexylammoniumtetrakis(2,3,4,6 tetrafluororphenyl)borat,
N,N-Diethylcyclohexylammoniumtetrakis(2,3,5,6 tetrafluorophenyl) borat,
N,N-Diethylcyclohexylammoniumtetrakis(2,3,5 trifluorophenyl)borat,
N,N-Diethylcyclohexylammoniumtetrakis(2,3,6 trifluorophenyl)borat,
N,N-Diethylcyclohexylammoniumtetrakis(1,3 difluorophenyl)borat,
N,N-Diethylcyclohexylammoniumtetrakis(2,3,5,6 tetrafluoo-4-methylphenyl)borat,
N,N-Diethylcyclohexylammoniumtetrakis(2,3,4,6 tetrafluoro-5-methylphenyl)borat,
N,N-Diethylcyclohexylammoniumtetrakis(2,3,5 trifluorophenyl)borat,
N,N-Diethylcyclohexylammoniumtetrakis(2,4,5 trifluoro-6-methylphenyl)borat,
N,N-Diethylcyclohexylammoniumtetrakis(2,3,6 trifluoro-4-methylphenyl)borat,
N,N-Diethylcyclohexylammoniumtetrakis(2,4,6 trifluoro-3-methylphenyl) borat,
N,N-Diethylcyclohexylammoniumtetrakis(2,6 difluoro-3-methylphenyl) borat,
N,N-Diethylcyclohexylammoniumtetrakis(2,4 difluoro-5-methylphenyl)borat,
N,N-Diethylcyclohexylammoniumtetrakis(3,5 difluoro-2-methylphenyl)borat,
N,N-Diethylcyclohexylammoniumtetrakis(4-methoxy-2,3,5,6 tetrafluorophenyl)borat,
N,N-iethylcyclohexylammoniumtetrakis(3-methoxy-2,4,5,6 tetrafluorophenyl)borat,
N,N-Diethylcyclohexylammoniumtetrakis(2-methoxy-3,4,5,6 tetrafluorophenyl)borat.
N,N-Diisopropylcyclohexylammoniumtetrakis(pentafluorophenyl)borat,
N,N-Diisopropylcyclohexylammoniumtetrakis(2,3,4,6 tetrafluorophenyl)borat,
N,N-Diisopropylcyclohexylammoniumtetrakis(2,3,5,6 tetrafluorophenyl)borat,
N,N-Diisopropylcyclohexylammoniumtetrakis(2,3,5 trifluorophenyl)borat,
N,N-Diisopropylcyclohexylammoniumtetrakis(2,3,6 trifluorophenyl)borat,
N,N-Diisopropylcyclohexylammoniumtetrakis(1,3 difluorophenyl)borat,
N,N-Diisopropylcyclohexylammoniumtetrakis(2,3,5,6 tetrafluoro-4-methylphenyl)borat,
N,N-Diisopropylcyclohexylammoniumtetrakis(2,3,4,6 tetrafluoro-5-methylphenyl)borat,
N,N-Diisopropylcyclohexylammoniumtetrakis(2,3,5 trifluorophenyl)borat,
N,N-Diisopropylcyclohexylammoniumtetrakis(2,4,5 trifluoro-6-methylphenyl)borat,
N,N-Diisopropylcyclohexylammoniumtetrakis(2,3,6 trifluoro-4-methylphenyl)borat,
N,N-Diisopropylcyclohexylammoniumtetrakis(2,4,6 trifluoro-3-methylphenyl)borat,
N,N-Diisopropylcyclohexylammoniumtetrakis(2,6 difluoro-3-methylphenyl)borat,
N,N-Diisopropylcyclohexylammoniumtetrakis(2,4 difluoro-5-methylphenyl)borat,
N,N-Diisopropylcyclohexylammoniumtetrakis(3,5 difluoro-2-methylphenyl)borat,
N,N-Diisopropylcyclohexylammoniumtetrakis(4-methoxy-2,3,5,6 tetrafluorophenyl) borat,
N,N-Diisopropylcyclohexylammoniumtetrakis(3-methoxy-2,4,5,6 tetrafluorophenyl)borat,
N,N-Diisopropylcyclohexylammoniumtetrakis(2-methoxy-3,4,5,6 tetrafluorophenyl)borat;
N,N-Diethylbenzylammoniumtetrakis(pentafluorophenyl)borat.
N,N-Diisopropylbenzylammoniumtetrakis(pentafluorophenyl)borat,
N,N-Diethylbenzylammoniumtetrakis(2.3,4,6 tetrafluorophenyl)borat,
N,N-Diethylbenzylammoniumtetrakis(2,3,5.6 tetrafluorophenyl)borat,
N,N-Diethylbenzylammoniumtetrakis(2,3,5 trifluorophenyl)borat,
N,N-Diethylbenzylammoniumtetrakis(2,3,6 trifluorophenyl)borat,
N,N-Diethylbenzylammoniumtetrakis(1,3 difluorophenyl)borat,
N,N-Diethylbenzylammoniumtetrakis(2,3,5,6 tetrafluoro-4-methylphenyl) borat,
N,N-Diethylbenzylammoniumtetrakis(2,3,4,6 tetrafluoro-5-methylphenyl)borat,
N,N-Diethylbenzylammoniumtetrakis(2,3,5 trifluorophenyl)borat,
N,N-Diethylbenzylmoniumtetrakis(2,4,5 trifluoro-6-methylphenyl) borat,
N,N-Diethylbenzylammoniumtetrakis(2,3,6 trifluoro-4-methylphenyl)borat,
N,N-Diethylbenzylammoniumtetrakis(2,4,6 trifluoro-3-methylphenyl) borat,
N,N-Diethylbenzylammoniumtetrakis(2,6 difluoro-3-methylphenyl)borat,
N,N-Diethylbenzylammoniumtetrakis(2,4 difluoro-5-methylphenyl)borat,
N,N-Diethylbenzylammoniumtetrakis(3,5 difluoro-2-methylphenyl)borat,
N,N-Diethylbenzylammoniumtetrakis(4-methoxy-2,3,5,6 tetrafluorophenyl)borat,
N,N-Diethylbenzylammoniumtetrakis(3-methoxy-2,4,5,6 tetrafluorophenyl)borat,
N,N-Diethylbenzylammoniumtetrakis(2-methoxy-3,4,5,6 tetrafluorophenyl)borat
N,N-Dimethylbenzylammoniumtetrakis(pentaf luororphenyl)borat,
N,N-DimethylbenzylammoniumTetrakis(2,3,4,6 tetrafluorophenyl)borat,
N,N-Dimmethylbenzylammoniumtetrakis(2,3,5,6 tetrafluorophenyl)borat,
N,N-Dimethylbenzylammoniumtetrakis(2,3,5 trifluorophenyl)borat,
N,N-Dimethylbenzylammoniumtetrakis(2.3,6 trifluorophenyl)borat,
N,N-Dimethylbenzylammoniumtetrakis(1,3 difluorophenyl)borat,
N,N-Dimethylbenzylammoniumtetrakis(2,3,5,6 tetrafluoro-4-methylphenyl)borat,
N,N-Dimethylbenzylammoniumtetrakis(2,3,4,6 tetrafluoro-5-methylphenyl) borat,
N,N-Dimethylbenzylammoniumtetrakis(2,3,5 trifluororphenyl)borat,
N,N-Dimethylbenzylammoniumtetrakis(2,4,5 trifluoro-6-methylphenyl)borat,
N,N-Dimethylbenzylammoniumtetrakis(2,3,6 trifluoro-4-methylphenyl) borat,
N,N-Dimethylbenzylammoniumtetrakis(2,4,6 trifluoro-3-methylphenyl)borat,
N,N-Dimethylbenzylammoniumtetrakis(2,6 difluoro-3-methylphenyl) borat,
N,N-Dimethylbenzylammoniumtetrakis(2,4 difluoro-5-methylphenyl)borat,
N,N-Dimethylbenzylammoniumtetrakis(3,5 difluoro-2-methylphenyl)borat,
N,N-Dimethylbenzylammoniumtetrakis(4-methoxy-2,3,5,6 tetrafluorophenyl)borat,
N,N-Dimethylbenzylammoniumtetrakis(3-methoxy-2,4,5,6 tetrafluorophenyl)borat,
N,N-Dimethylbenzylammoniumtetrakis(2-methoxy-3,4,5,6 tetrafluorophenyl)borat
N,N-Dimethylcyclohexylmethylammoniumtetrakis(pentafluorophenyl)borat
N,N-Diethylcyclohexylmethylammoniumtetrakis(pentafluorophenyl)borat
N,N-Diethylcyclohexylethylammoniumtetrakis(pentafluorophenyl)borat
N,N-Dimethylcyclohexylethylammoniumtetrakis(pentaf luorophenyl)borat
N,N-Diisopropylcyclohexylmethylammoniumtetrakis(pentafluorophenyl)borat
N,N-Diisopropylcyclohexylethylammoniumtetrakis(pentafluorophenyl)borat
N,N-Dimethylcyclohexylpropylammoniumtetrakis(pentafluorophenyl)borat
N,N-Diethylcyclohexylpropylammoniumtetrakis(pentafluorophenyl)borat
N,N-Dimethylcyclohexylpropylammoniumtetrakis(pentafluorophenyl)borat
N,N-Diisopropylcyclohexylpropylammoniumtetrakis(pentafluorophenyl)borat
N,N-Diisobutylcyclohexylpropylammoniumtetrakis(pentafluorophenyl)borat
N,N-Diethylcyclohexylbutylammoniumtetrakis(pentafluorophenyl)borat
N,N-Dimethylcyclohexylbutylammoniumtetrakis(pentafluorophenyl)borat
N,N-Diisopropylcyclohexylbutylammoniumtetrakis(pentafluorophenyl)borat
N,N-Diisobutylcyclohexylbutylammoniumtetrakis(pentafluorophenyl)borat
N,N-Diethylcyclohexylhexylammoniumtetrakis(pentafluorophenyl)borat
N,N-Dimethylcyclohexylhexylammoniumtetrakis(pentafluorophenyl)borat
N,N-Diisopropylcyclohexylhexylammoniumtetrakis(pentafluorophenyl)borat
N,N-Diisobutylcyclohexylhexylammoniumtetrakis(pentafluorophenyl)borat
N,N-Dibutylcyclohexylmethylammoniumtetrakis(pentafluorophenyl)borat
N,N-Dibutylcyclohexylethylammoniumtetrakis(pentafluorophenyl)borat
N,N-Dibutylcyclohexylpropylammoniumtetrakis(pentafluorophenyl)borat
N,N-Dibutylcyclohexylbutylammoniumtetrakis(pentafluorophenyl)borat
N,N-Dibutylcyclohexylhexylammoniumtetrakis(pentafluorophenyl)borat
N,N-Dimethyl-4-methylbenzylammoniumtetrakis(pentafluorophenyl)borat
N,N-Diethyl-4-methylbenzylammoniumtetrakis(pentafluorophenyl)borat
N,N-Diisopropyl-4-methylbenzylmethylammoniumtetrakis(pentafluorophenyl)borat
N,N-Diisobutyl-4-methylbenzylpropylammoniumtetrakis(pentafluorophenyl)borat
N,N-Diethyl-3-methylbenzylammoniumtetrakis(pentafluorophenyl)borat
N,N-Diisopropyl-3-methylbenzylammoniumtetrakis(pentafluorophenyl)borat
N,N-Diisobutyl-3-methylbenzylammoniumtetrakis(pentafluorophenyl)borat
N,N-Diethyl-2-methylbenzylammoniumtetrakis(pentafluorophenyl)borat
N,N-Diisopropyl-2-methylbenzylammoniumtetrakis(pentafluorophenyl)borat
N,N-Diisobutyl-2-methylbenzylammoniumtetrakis(pentafluorophenyl)borat
N,N-Diethyl-3,5-dimethylbenzylammoniumtetrakis(pentafluorophenyl)borat
N,N-Diisopropyl-3,5-dimethylbenzylammoniumtetrakis(pentafluorophenyl)borat
N,N-Diisobutyl-3,5-dimethylbenzylammoniumtetrakis(pentafluorophenyl)borat
N,N-Diethyl-2,4-dimethylbenzylammoniumtetrakis.(pentafluorophenyl)borat
N,N-Diisopropyl-2,4-dimethylbenzylammoniumtetrakis(pentafluorophenyl)borat
N,N-Diisobutyl-2,4-dimethylbenzylammoniumtetrakis(pentafluorophenyl)borat
N,N-Dimethyl-4-ethylbenzylammoniumtetrakis(pentafluorophenyl)borat
N,N-Diethyl-4-ethylbenzylammoniumtetrakis(pentafluorophenyl)borat
N,N-Diisopropyl-4-ethylbenzylmethylammoniumtetrakis(pentafluorophenyl)borat
N,N-Diisobutyl-4-ethylbenzylpropylammoniumtetrakis(pentafluorophenyl)borat
N,N-Diethyl-3-propylbenzylammoniumtetrakis(pentafluorophenyl)borat
N,N-Diisopropyl-3-propylbenzylammoniumtetrakis(pentafluorophenyl)borat
N,N-Diisobutyl-3-propylbenzylammoniumtetrakis(pentafluorophenyl)borat
N,N-Diethyl-2-propylbenzylammoniumtetrakis(pentafluorophenyl)borat
N,N-Diisopropyl-2-propylbenzylammoniumtetrakis(pentafluorophenyl)borat
N,N-Diisobutyl-2-propylbenzylammoniumtetrakis(pentafluorophenyl)borat
N,N-Diethyl-3,5-dipropylbenzylammoniumtetrakis(pentafluorophenyl)borat
N,N-Diisopropyl-3,5-dipropylbenzylammoniumtetrakis(pentafluorophenyl)borat
N,N-Diisobutyl-3,5-dipropylbenzylammoniumtetrakis(pentafluorophenyl)borat
N,N-Diethyl-2,4-dipropylbenzylammoniumtetrakis(pentafluorophenyl)borat
N,N-Diisopropyl-2,4-dipropylbenzylammoniumtetrakis(pentafluorophenyl)borat
N,N-Diisobutyl-2,4-dipropylbenzylammoniumtetrakis(pentafluorophenyl)borat
N,N-Diethyl-3-ethylbenzylammoniumtetrakis(pentafluorophenyl)borat
N,N-Diisopropyl-3-ethylbenzylammoniumtetrakis(pentafluorophenyl)borat
N,N-Diisobutyl-3-ethylbenzylammoniumtetrakis(pentafluorophenyl)borat
N,N-Diethyl-2-ethylbenzylammoniumtetrakis(pentafluorophenyl)borat
N,N-Diisopropyl-2-ethylbenzylammoniumtetrakis(pentafluorophenyl)borat
N,N-Diisobutyl-2-ethylbenzylammoniumtetrakis(pentafluorophenyl)borat
N,N-Diethyl-3,5-ethylbenzylammoniumtetrakis(pentafluorophenyl)borat
N,N-Diisopropyl-3,5-diethylbenzylammoniumtetrakis(pentafluorophenyl)borat
N,N-Diisobutyl-3,5-diethylbenzylammoniumtetrakis(pentafluorohenyl)borat
N,N-Diethyl-2,4-diethylbenzylammoniumtetrakis(pentafluorophenyl)borat
N,N-Diisopropyl-2,4-diethylbenzylammoniumtetrakis(pentafluorophenyl)borat
N,N-Diisobutyl-2,4-diethylbenzylammoniumtetrakis(pentafluorophenyl)borat
N,N-Diethyl-3-butylbenzylammoniumtetrakis(pentafluorophenyl)borat
N,N-Diisopropyl-3-butylbenzylammoniumtetrakis(pentafluorophenyl)borat
N,N-Diisobutyl-3-butylbenzylammoniumtetrakis(pentafluorophenyl)borat
N,N-Diethyl-2-butylbenzylammoniumtetrakis(pentafluorophenyl)borat
N,N-Diisopropyl-2-butylbenzylammoniumtetrakis(pentafluorophenyl)borat
N,N-Diisobutyl-2-butylbenzylammoniumtetrakis(pentafluorophenyl)borat
N,N-Diethyl-3,5-dibutylbenzylammoniumtetrakis(pentafluorophenyl)borat
N,N-Diisopropyl-3,5-dibutylbenzylammoniumtetrakis(pentafluorophenyl)borat
N,N-Diisobutyl-3,5-dibutylbenzylammoniumtetrakis(pentafluorophenyl)borat
N,N-Diethyl-2,4-dibutylbenzylammoniumtetrakis(pentafluorophenyl)borat
N,N-Diisopropyl-2,4-dibutylbenzylammoniumtetrakis(pentafluorophenyl)borat
N,N-Diisobutyl-2,4-dibutylbenzylammoniumtetrakis(pentafluorophenyl)borat
N,N-Dimethyl-cyclopentylammoniumtetrakis(pentafluorophenyl)borat,
N,N-Dimethyl-methylcyclohexylammoniumtetrakis(pentafluorophenyl)borat,
N,N-Diethyl-methylcyclohexylammoniumtetrakis(pentafluorophenyl)borat,
N-Methyl-N-Ethyl-cyclopentylammoniumtetrakis(pentafluorophenyl)borat,
N-Methyl-N-Ethyl-cyclohexylammoniumtetrakis(pentafluorophenyl)borat,
N-Methyl-N-Ethyl-methylcyclohexylammoniumtetrakis(pentafluorophenyl)borat,
N-Methyl-N-Ethyl-benzylammoniumtetrakis(pentafluorophenyl)borat,
N-Methyl-dicyclopentylammoniumtetrakis(pentafluorophenyl)borat,
N-Methyl-dicyclohexyl ammoniumtetrakis(pentafluorophenyl)borat,
N-Methyl-bis(methylcyclohexyl)ammoniumtetrakis(pentafluorophenyl)borat,
N-Methyl-dibenzylammoniumtetrakis(pentafluorophenyl)borat,
N-Methyl-bis(dimethylcyclohexyl)ammoniumtetrakis(pentafluorophenyl)borat,
N-Ethyl-dicyclopentylammoniumtetrakis(pentafluorophenyl)borat,
N-Ethyl-dicyclohexylammoniumtetrakis(pentafluorophenyl)borat,
N-Ethyl-bis(methylcyclohexyl)ammoniumtetrakis(pentafluorophenyl)borat,
N-Ethyl-di(benzyl)ammoniumtetrakis(pentafluorophenyl)borat,
N-Ethyl-bis(dimethylcyclohexyl) ammoniumtetrakis(pentafluorophenyl)borat.

Die Herstellung einer erfindungsgemäßen chemischen Verbindung der Formel (I) und (II) erfolgt in der in der Literatur beschriebenen Art und weise. Die Umsetzung zum Hydrochloridammoniumsalz erfolgt durch die Reaktion des entsprechenden Amins mit Chlorwasserstoff. Die weitere Umsetzung zum Ammonium-Tetraphenylborat erfolgt durch Reaktion mit dem entsprechenden Alkali- oder Erdalkaliborat.

Nicht limitierende Beispiele für die Amine sind:
N,N-Dimethylcyclohexylamin, N,N-Diethylcyclohexylamin,
N,N-Diethylbenzylamin,
N,N-Dimethylbenzylamin,
N,N-Dimethylcyclopentylamin, N,N-Dimethylcycloheptenylamin,
N,N-Dimethylcyclooctylamin, N,N-Diethylcyclopentylamin,
N,N-Diethylcycloheptenylamin, N,N-Diethylcyclooctylamin,
N-Benzyldimethylamin, N-Benzyldiethylamin, N-Benzylbutylamin, N-Benzyl tert.-butylamin, N'-Benzyl-N,N-dimethylethylendiamin,
N-Benzylethylendiamin, N-Benzylisopropylamin, N-Benzylmethylamin,
N-Benzylethylamin, N-Benzyl-1-phenylethylamin, N-Benzyl-2-phenylethylamin, oder N-Benzylpiperazin
N,N-Dimethyl-cyclopentylamin,
N,N-Dimethyl-cyclohexylamin,
N,N-Dimethyl-cycloheptylamin, N,N-Dimethyl-methylcyclohexylamin,
N,N-Dimethyl-benzylamin,
N,N-Dimethyl-cyclooctylamin, N,N-Dimethyl-dimethylcyclohexylamin,
N,N-Diethyl-cyclopentylamin,
N,N-Diethyl-cyclohexylamin,
N,N-Diethyl-cycloheptylamin, N,N-Diethyl-methylcyclohexylamin,
N,N-Diethyl-benzylamin,
N,N-Diethyl-cyclooctylamin, N,N-Diethyl-dimethylcyclohexylamin,
N-Methyl-N-Ethyl-cyclopentylamin,
N-Methyl-N-Ethyl-cyclohexylamin,
N-Methyl-N-Ethyl-cycloheptylamin,
N-Methyl-N-Ethyl-methylcyclohexylamin,
N-Methyl-N-Ethyl-benzylamin,
N-Methyl-N-Ethyl-cyclooctylamin,
N-Methyl-N-Ethyl-dimethylcyclohexylamin,
N-Methyl-dicyclopentylamin,
N-Methyl-dicyclohexylamin,
N-Methyl-bis(cycloheptyl)amin,
N-Methyl-bis(methylcyclohexyl)amin,
N-Methyl-dibenzylamin,
N-Methyl-bis(cyclooctyl)amin,
N-Methyl-bis(dimethylcyclohexyl)amin,
N-Ethyl-dicyclopentylamin,
N-Ethyl-dicyclohexylamin,
N-Ethyl-bis(cycloheptyl)amin, N-Ethyl-bis(methylcyclohexyl)amin,
N-Ethyl-di(benzyl)amin,
N-Ethyl-bis(cyclooctyl)amin, N-Ethyl-bis(dimethylcyclohexyl)amin.

Nicht limitierende Beispiele für die verwendeten Alkali- oder Erdalkali- Tetraphenylborate sind:
Lithium-Tetrakis(pentafluororphenyl)borat, Natrium-Tetrakis(pentafluororphenyl)borat, Kalium-Tetrakis(pentafluororphenyl)borat, Lithium-Tetrakis(2,3,4,6 tetrafluororphenyl)borat, Natrium-Tetrakis(2,3,4,6 tetrafluororphenyl)borat, Kalium-Tetrakis(2,3,4,6 tetrafluororphenyl)borat, Lithium-Tetrakis(2,3,5,6 tetrafluororphenyl)borat, Natrium-Tetrakis(2,3,5,6 tetrafluororphenyl)borat, Kalium-Tetrakis(2,3,5,6 tetrafluororphenyl)borat, Lithium-Tetrakis(2,3,5 trifluororphenyl)borat, Natrium-Tetrakis(2,3,5 trifluororphenyl)borat, Kalium-Tetrakis(2,3,5 trifluororphenyl)borat, Lithium-Tetrakis(2,3,6 trifluororphenyl)borat, Natrium-Tetrakis(2,3,6 trifluororphenyl)borat, Kalium-Tetrakis(2,3,6 trifluororphenyl)borat, Lithium-Tetrakis(1,3 difluororphenyl)borat, Natrium-Tetrakis(1,3 difluororphenyl)borat, Kalium-Tetrakis(1,3 difluororphenyl)borat, Lithium-Tetrakis(2,3,5,6 tetrafluoro-4-methylphenyl)borat, Natrium-Tetrakis(2,3,5,6 tetrafluoro-4-methylphenyl)borat, Kalium-Tetrakis(2,3,5,6 tetrafluoro-4-methylphenyl)borat, Lithium-Tetrakis(2,3,4,6 tetrafluoro-5-methylphenyl)borat, Natrium-Tetrakis(2,3,4,6 tetrafluoro-5-methylphenyl)borat, Kalium-Tetrakis(2,3,4,6 tetrafluoro-5-methylphenyl)borat, Lithium-Tetrakis(2,3,5 trifluororphenyl)borat, Natrium-Tetrakis(2,3,5 trifluororphenyl)borat, Kalium-Tetrakis(2,3,5 trifluorophenyl)borat, Lithium-Tetrakis(2, 4,5 trifluoro-6-methylphenyl)borat, Natrium-Tetrakis(2,4,5 trifluoro-6-methyl-phenyl)borat, Kalium-Tetrakis(2,4,5 trifluoro-6-methylphenyl)borat, Lithium-Tetrakis(2,3,6 trifluoro-4-methylphenyl)borat, Natrium-Tetrakis(2,3,6 trifluoro-4-methyl-phenyl)borat, Kalium-Tetrakis(2,3,6 trifluoro-4-methylphenyl)borat, Lithium-Tetrakis(2,4,6 trifluoro-3-methylphenyl)borat, Natrium-Tetrakis(2,4,6 tri fluoro-3-methyl-phenyl)borat, Kalium-Tetrakis(2,4,6 trifluoro-3-methylphenyl)borat, Lithium-Tetrakis(2,6 difluoro-3-methylphenyl)borat, Natrium-Tetrakis(2,6 difluoro-3-methyl-phenyl)borat, Kalium-Tetrakis(2,6 difluoro-3-methylphenyl)borat, Lithium-Tetrakis(2,4 difluoro-5-methylphenyl)borat, Natrium-Tetrakis(2,4 difluoro-5-methyl-phenyl)borat, Kalium-Tetrakis(2,4 difluoro-5-methylphenyl)borat, Lithium-Tetrakis(3,5 difluoro-2-methylphenyl)borat, Natrium-Tetrakis(3,5 difluoro-2-methyl-phenyl)borat, Kalium-Tetrakis(3,5 difluoro-2-methylphenyl)borat, Lithium-Tetrakis(4-methoxy-2,3,5, 6 tetrafluorophenyl)borat, Natrium-Tetrakis(4-methoxy-2,3,5,6 tetrafluorophenyl)borat, Kalium-Tetrakis(4-methoxy-2,3,5,6 tetrafluorophenyl)borat, Lithium-Tetrakis(3-methoxy-2,4,5,6 tetrafluorophenyl)borat, Natrium-Tetrakis(3-methoxy-2,4,5,6 tetrafluorophenyl)borat, Kalium-Tetrakis(3-methoxy-2,4,5,6 tetrafluorophenyl)borat, Lithium-Tetrakis(2-methoxy-3,4,5,6 tetrafluorophenyl)borat, Natrium-Tetrakis(2-methoxy-3,4,5,6 tetrafluorophenyl)borat, Kalium-Tetrakis(2-methoxy-3,4,5,6 tetrafluorophenyl)borat.

Diese Borate können auch Lösungsmittel, wie Etherat oder ähnliches enthalten. Die Umsetzung zu den entsprechenden Ammoniumverbindungen der Formel (I) oder (II) kann in einem aliphatischen oder aromatischen Lösemittel wie Toluol, Heptan, Tetrahydrofuran oder Diethylether erfolgen. Die Reaktionszeit liegt zwischen 1 Minute und 24 Stunden, wobei eine Reaktionszeit zwischen 5 Minuten und 240 Minuten bevorzugt wird. Die Reaktionstemperatur liegt zwischen -10°C und + 200°C, wobei eine Temperatur zwischen 0 °C und 50 °C bevorzugt wird.

Die vorliegende Erfindung betrifft außerdem ein Katalysatorsystem, welches ebenfalls Gegenstand der vorliegenden Erfindung ist.

Das erfindungsgemäße Katalysatorsystem enthält:
A) mindestens eine Organometallübergangsverbindung,
B) mindestens eine Verbindung der Formel (IV);
C) mindestens eine Trägerkomponente und
D) mindestens eine erfindungsgemäße Verbindung der Formel (I) oder (II).

Als Organometallübergangsverbindung A) werden z.B. Metallocenverbindungen eingesetzt. Diese können z.B. verbrückte oder unverbrückte Biscyclopentadienylkomplexe sein, wie sie beispielsweise in EP-A-0 129 368, EP-A-0 561 479, EP-A-0 545 304 und EP-A-0 576 970 beschrieben sind, Monocyclopentadienylkomplexe, wie verbrückte Amidocyclopentadienylkomplexe die beispielsweise in EP-A-0 416 815 beschrieben sind, mehrkernige Cyclopentadienylkomplexe wie beispielsweise in EP-A-0 632 063 beschrieben, n-Ligand substituierte Tetrahydropentalene wie beispielsweise in EP-A-0 659 758 beschrieben oder π-Ligand substituierte Tetrahydroindene wie beispielsweise in EP-A-0 661 300 beschrieben. Außerdem können Organometallverbindungen eingesetzt werden in denen der komplexierende Ligand kein Cyclopentadienyl-Liganden enthält. Beispiele hierfür sind Diamin-Komplexe von Metallen der III. und IV. Nebengruppe des Periodensystems der Elemente, wie sie z.B. bei D.H. McConville, et al, Macromolecules, 1996, 29, 5241 und D.H. McConville, et al, J. Am. Chem. Soc., 1996, 118, 10008 beschrieben werden. Außerdem können Diimin-Komplexe von Metallen der VIII. Nebengruppe des Periodensystems der Elemente (z.B. Ni²⁺ oder Pd²⁺ Komplexe), wie sie bei Brookhart et al, J. Am. Chem. Soc. 1995, 117, 6414 und, Brookhart et al, J. Am. Chem. Soc., 1996, 118, 267 beschrieben werden, eingesetzt werden. Ferner lassen sich 2,6-bis(imino)pyridyl-Komplexe von Metallen der VIII. Nebengruppe des Periodensystems der Elemente (z.B. Co²⁺ oder Fe²⁺ Komplexe), wie sie bei Brookhart et al, J. Am. Chem. Soc. 1998, 120, 4049 und Gibson et al, Chem. Commun. 1998, 849 beschrieben werden, einsetzen. Weiterhin können Metallocenverbindungen eingesetzt werden, deren komplexierender Ligand Heterocyclen enthält. Beispiele hierfür sind in WO 98/22486 beschrieben.

Bevorzugte Metallocenverbindungen sind unverbrückte oder verbrückte Verbindungen der Formel (III), 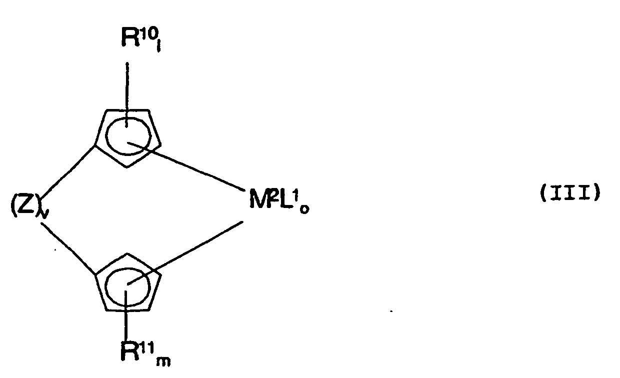 worin
- M²: ein Metall der III., IV., V. oder VI. Nebengruppe des Periodensystems der Elemente ist, insbesondere Ti, Zr oder Hf,
- R¹⁰: gleich oder verschieden sind und ein Wasserstoffatom oder Si(R¹²)₃ sind, worin R¹² gleich oder verschieden ein Wasserstoffatom oder eine C₁-C₄₀-kohlenstoffhaltige Gruppe, bevorzugt C₁-C₂₀-Alkyl, C₁-C₁₀-Fluoralkyl, C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl, oder R¹⁰ eine C₁-C₃₀ - kohlenstoffhaltige Gruppe, bevorzugt C₁-C₂₅-Alkyl, wie Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist, oder zwei oder mehrere Reste R¹⁰ können so miteinander verbunden sein, daß die Reste R¹⁰ und die sie verbindenden Atome des Cyclopentadienylringes ein C₄-C₂₄-Ringsystem bilden, welches seinerseits substituiert sein kann,
- R¹¹: gleich oder verschieden sind und ein Wasserstoffatom oder Si(R¹²)₃ sind, worin R¹² gleich oder verschieden ein Wasserstoffatom oder eine C₁-C₄₀-kohlenstoffhaltige Gruppe, bevorzugt C₁-C₂₀-Alkyl, C₁-C₁₀-Fluoralkyl, C₁-C₁₀-Alkoxy, C₆-C₁₄-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl, oder R¹¹ eine C₁-C₃₀ - kohlenstoffhaltige Gruppe, bevorzugt C₁-C₂₅-Alkyl, wie Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl, C₅-C₂₄-Alkylheteroaryl, C₅-C₂₄-Alkylheteroaryl C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist, oder zwei oder mehrere Reste R¹¹ können so miteinander verbunden sein, daß die Reste R¹¹ und die sie verbindenden Atome des Cyclopentadienylringes ein C₄-C₂₄-Ringsystem bilden, welches seinerseits substituiert sein kann,
- l: gleich 5 für v = 0, und 1 gleich 4 für v = 1 ist,
- m: gleich 5 für v = 0, und m gleich 4 für v = 1 ist,
- L¹: gleich oder verschieden sein können und ein Wasserstoffatom, eine C₁-C₁₀-Kohlenwasserstoffgruppe wie C₁-C₁₀-Alkyl oder C₆-C₁₀-Aryl, ein Halogenatom, oder OR¹⁶, SR¹⁶, OSi(R¹⁶)₃, Si(R¹⁶)₃, P(R¹⁶)₂ oder N(R¹⁶)₂ bedeuten, worin R¹⁶ ein Halogenatom, eine C₁-C₁₀ Alkylgruppe, eine halogenierte C₁-C₁₀ Alkylgruppe, eine C₆-C₂₀ Arylgruppe oder eine halogenierte C₆-C₂₀ Arylgruppe sind, oder L¹ sind eine Toluolsulfonyl-, Trifluoracetyl-, Trifluoracetoxyl-, Trifluormethansulfonyl-, Nonaf luorbutansulfonyl- oder 2,2,2-Trif luorethansulfonylGruppe,
- o: eine ganze Zahl von 1 bis 4, bevorzugt 2 ist,
- Z: ein verbrückendes Strukturelement zwischen den beiden Cyclopentadienylringen bezeichnet und v ist 0 oder 1.

Beispiele für Z sind Gruppen M²R¹³R¹⁴, worin M² Kohlenstoff, Silizium, Germanium Bor oder Zinn ist und R¹³ und R¹⁴ gleich oder verschieden eine C₁-C₂₀-kohlenwasserstoffhaltige Gruppe wie C₁-C₁₀-Alkyl, C₆-C₁₄-Aryl oder Trimethylsilyl bedeuten. Bevorzugt ist Z gleich CH₂, CH₂CH₂, CH(CH₃)CH₂, CH(C₄H₉)C(CH₃)₂, C(CH₃)₂, (CH₃)₂Si, (CH₃)₂Ge, (CH₃)₂Sn, (C₆H₅)₂Si, (C₆H₅) (CH₃)Si, (C₆H₅)₂Ge, (C₆H₅)₂Sn, (CH₂)₄Si, CH₂Si(CH₃)₂, O-C₆H₄ oder 2,2'-(C₆H₄)₂. Z kann auch mit einem oder mehreren Resten R¹⁰ und/oder R¹¹ ein mono- oder polycyclisches Ringsystem bilden.

Bevorzugt sind chirale verbrückte Metallocenverbindungen der Formel (III), insbesondere solche in denen v gleich 1 ist und einer oder beide Cyclopentadienylringe so substituiert sind, daß sie einen Indenylring darstellen. Der Indenylring ist bevorzugt substituiert, insbesondere in 2-,4-, 2,4,5-, 2,4,6-, 2,4,7 oder 2,4,5,6-Stellung, mit C₁-C₂₀-kohlenstoffhaltigen Gruppen, wie C₁-C₁₀-Alkyl oder C₆-C₂₀-Aryl, wobei auch zwei oder mehrere Substituenten des Indenylrings zusammen ein Ringsystem bilden können.

Chirale verbrückte Metallocenverbindungen der Formel (III) können als reine racemische oder reine meso Verbindungen eingesetzt werden. Es können aber auch Gemische aus einer racemischen Verbindung und einer meso Verbindung verwendet werden.

Beispiele für Metallocenverbindungen sind:
Dimethylsilandiylbis(indenyl)zirkoniumdichlorid
Dimethylsilandiylbis(4-naphthyl-indenyl)zirkoniumdichlorid
Dimethylsilandiylbis(2-methyl-benzo-indenyl)zirkoniumdichlorid
Dimethylsilandiylbis(2-methyl-indenyl)zirkoniumdichlorid
Dimethylsilandiylbis(2-methyl-4-(1-naphthyl)-indenyl)zirkoniumdichlorid
Dimethylsilandiylbis(2-methyl-4-(2-naphthyl)-indenyl)zirkoniumdichlorid
Dimethylsilandiylbis(2-methyl-4-phenyl-indenyl)zirkoniumdichlorid
Dimethylsilandiylbis(2-methyl-4-t-butyl-indenyl)zirkoniumdichlorid
Dimethylsilandiylbis(2-methyl-4-isopropyl-indenyl)zirkoniumdichlorid
Dimethylsilandiylbis(2-methyl-4-ethyl-indenyl)zirkoniumdichlorid
Dimethylsilandiylbis(2-methyl-4-α-acenaphth-indenyl)zirkoniumdichlorid
Dimethylsilandiylbis(2,4-dimethyl-indenyl)zirkoniumdichlorid
Dimethylsilandiylbis(2-ethyl-indenyl)zirkoniumdichlorid
Dimethylsilandiylbis(2-ethyl-4-ethyl-indenyl)zirkoniumdichlorid
Dimethylsilandiylbis(2-ethyl-4-phenyl-indenyl)zirkoniumdichlorid
Dimethylsilandiylbis(2-methyl-4,5-benzo-indenyl)zirkoniumdichlorid
Dimethylsilandiylbis(2-methyl-4,6 diisopropyl-indenyl)zirkoniumdichlorid
Dimethylsilandiylbis(2-methyl-4,5 diisopropyl-indenyl)zirkoniumdichlorid
Dimethylsilandiylbis(2,4,6-trimethyl-indenyl)zirkoniumdichlorid
Dimethylsilandiylbis(2,5,6-trimethyl-indenyl)zirkoniumdichlorid
Dimethylsilandiylbis(2,4,7-trimethyl-indenyl)zirkoniumdichlorid
Dimethylsilandiylbis(2-methyl-5-isobutyl-indenyl)zirkoniumdichlorid
Dimethylsilandiylbis(2-methyl-5-t-butyl-indenyl)zirkoniumdichlorid
Methyl(phenyl)silandiylbis(2-methyl-4-phenyl-indenyl)zirkoniumdichlorid
Methyl(phenyl)silandiylbis(2-methyl-4,6 diisopropyl-indenyl)zirkoniumdichlorid
Methyl(phenyl)silandiylbis(2-methyl-4-isopropyl-indenyl)zirkoniumdichlorid
Methyl(phenyl)silandiylbis(2-methyl-4,5-benzo-indenyl)zirkoniumdichlorid
Methyl(phenyl)silandiylbis(2-methyl-4,5-(methyl-benzo)-indenyl)zirkoniumdi-chlorid
Methyl(phenyl)silandiylbis(2-methyl-4,5-(tetramethylbenzo)-indenyl) zirkoniumdichlorid
Methyl(phenyl)silandiylbis(2-methyl-4-α-acenaphthindenyl)zirkoniumdichlorid
Methyl(phenyl)silandiylbis(2-methyl-indenyl)zirkoniumdichlorid
Methyl(phenyl)silandiylbis(2-methyl-5-isobutyl-indenyl)zirkoniumdichlorid
1,2-Ethandiylbis(2-methyl-4-phenyl-indenyl)zirkoniumdichlorid
1,4-Butandiylbis(2-methyl-4-phenyl-indenyl)zirkoniumdichlorid
1,2-Ethandiylbis(2-methyl-4,6 diisopropyl-indenyl)zirkoniumdichlorid
1,4-Butandiylbis(2-methyl-4-isopropyl-indenyl)zirkoniumdichlorid
1,4-Butandiylbis(2-methyl-4,5-benzo-indenyl)zirkoniumdichlorid
1,2-Ethandiylbis(2-methyl-4,5-benzo-indenyl)zirkoniumdichlorid
1,2-Ethandiylbis(2,4,7-trimethyl-indenyl)zirkoniumdichlorid
1,2-Ethandiylbis(2-methyl-indenyl)zirkoniumdichlorid
1,4-Butandiylbis(2-methyl-indenyl)zirkoniumdichlorid
[4-(η⁵-cyclopentadienyl)-4,6,6-trimethyl-(η⁵-4,5-tetrahydropentalen)]-dichlorozirconium
[4-(η⁵-3'-Trimethylsilyl-cyclopentadienyl)-4,6,6-trimethyl-(η⁵-4,5-tetrahydropentalen)]-dichlorozirconium
[4-(η⁵-3'-Isopropyl-cyclopentadienyl)-4,6,6-trimethyl-(η⁵-4,5-tetrahydropentalen)]-dichlorozirconium
[4-(η⁵-Cyclopentadienyl)-4,7,7-trimethyl-(η⁵-4,5,6,7-tetrahydroindenyl)]-dichlorotitan
[4-(η⁵-Cyclopentadienyl)-4,7,7-trimethyl-(η⁵-4,5,6,7-tetrahydroindenyl)]-dichlorozirkonium
[4-(η⁵-Cyclopentadienyl)-4,7,7-trimethyl-(η⁵-4,5,6,7-tetrahydroindenyl)]-dichlorohafnium
[4-(η⁵-3'-tert.Butyl-cyclopentadienyl)-4,7,7-trimethyl-(η⁵-4,5,6,7-tetrahydroindenyl)]-dichlorotitan
4-(η⁵-3'-Isopropylcyclopentadienyl)-4,7,7-trimethyl-(η⁵-4,5,6,7-tetrahydroindenyl)]-dichlorotitan
4-(η⁵-3'-Methylcyclopentadienyl)-4,7,7-trimethyl-(η⁵-4,5,6,7-tetrahydroindenyl)]-dichlorotitan
4-(η⁵-3'-Trimethylsilyl-cyclopentadienyl)-2-trimethylsilyl-4,7,7-trimethyl-(η⁵-4,5,6,7-tetrahydroindenyl)]-dichlorotitan
4-(η⁵-3'-tert.Butyl-cyclopentadienyl)-4,7,7-trimethyl-(η⁵-4,5,6,7-tetrahydroindenyl)]-dichlorozirkonium (Tertbutylamido)-(tetramethyl-η⁵-cyclopentadienyl)-dimethylsilyldichlorotitan
(Tertbutylamido)-(tetramethyl-η⁵-cyclopentadienyl)-1,2-ethandiyldichlorotitan
(methylamido)-(tetramethyl-η⁵-cyclopentadienyl)-dimethylsilyldichlorotitan
(Methylamido)-(tetramethyl-η⁵-cyclopentadienyl)-1,2-ethandiyldichlorotitan
(Tertbutylamido)-(2,4-dimethyl-2,4-pentadien-1-yl)-dimethylsilyldichlorotitan
Bis-(cyclopentadienyl)-zirkoniumdichlorid
Bis-(n-butylcyclopentadienyl)-zirkoniumdichlorid
Bis-(1,3-dirnethylcyclopentadienyl)-zirkoniumdichlorid
Tetrachloro-[1-[bis(η⁵-1H-inden-1-yliden)methylsilyl]-3-η⁵-cyclopenta-2,4-dien-1-yliden)-3-η⁵-9H-fluoren-9-yliden)butan]di-zirkonium
Tetrachloro-[2-[bis(η⁵-2-methyl-1H-inden-1-yliden)methoxysily]-5-(η⁵-2,3,4,5-tetramethylcyclopenta-2,4-dien-1-yliden)-5-(η⁵-9H-fluoren-9-yliden)hexan]di-zirkonium
Tetrachloro-[1-[bis(η⁵-1H-inden-1-yliden)methylsilyl]-6-(η⁵-cyclopenta-2,4-dien-1-yliden)-6-(η⁵-9H-fluoren-9-yliden)-3-oxaheptan]di-zirkonium
Dimethylsilandiylbis(2-methyl-4-(tert-butyl-phenyl)-indenyl)-zirkoniumdichlorid
Dimethylsilandiylbis(2-methyl-4-(4-methyl-phenyl)-indenyl)zirkoniumdichlorid
Dimethylsilandiylbis(2-methyl-4-(4-ethyl-phenyl)-indenyl)zirkoniumdichlorid
Dimethylsilandiylbis(2-methyl-4-(4-trifluormethyl-phenyl)-indenyl)zirkoniumdichlorid
Dimethylsilandiylbis(2-methyl-4-(4-methoxy-phenyl)-indenyl)zirkoniumdichlorid
Dimethylsilandiylbis(2-ethyl-4-(4-tert-butyl-phenyl)-indenyl)zirkoniumdichlorid
Dimethylsilandiylbis(2-ethyl-4-(4-methyl-phenyl)-indenyl)zirkoniumdichlorid
Dimethylsilandiylbis(2-ethyl-4-(4-ethyl-phenyl)-indenyl)zirkoniumdichlorid
Dimethylsilandiylbis(2-ethyl-4-(4-trifluormethyl-phenyl)-indenyl)zirkoniumdichlorid
Dimethylsilandiylbis(2-ethyl-4-(4-methoxy-phenyl)-indenyl)zirkoniumdichlorid
Dimethylsilandiylbis(2-methyl-4-(4-tert-butyl-phenyl)-indenyl)zirkoniumdimethyl
Dimethylsilandiylbis(2-methyl-4-(4-methyl-phenyl)-indenyl)zirkoniumdimethyl
Dimethylsilandiylbis(2-methyl-4-(4-ethyl-phenyl)-indenyl)zirkoniumdimethyl
Dimethylsilandiylbis(2-methyl-4-(4-trifluormethyl-phenyl)-indenyl)zirkoniumdimethyl
Dimethylsilandiylbis(2-methyl-4-(4-methoxy-phenyl)-indenyl)zirkoniumdimethyl
Dimethylsilandiylbis(2-ethyl-4-(4-tert-butyl-phenyl)-indenyl)zirkoniumdimethyl
Dimethylsilandiylbis(2-ethyl-4-(4-methyl-phenyl)-indenyl)zirkoniumdimethyl
Dimethylsilandiylbis(2-ethyl-4-(4-ethyl-phenyl)-indenyl)zirkoniumdiethyl
Dimethylsilandiylbis(2-ethyl-4-(4-trifluormethyl-phenyl)-indenyl)zirkoniumdimethyl
Dimethylsilandiylbis(2-ethyl-4-(4-methoxy-phenyl)-indenyl)zirkoniumdimethyl
Dimethylsilandiylbis(2-methyl-4-(4'-tert.-butyl-phenyl)-indenyl)zirkoniumdichlorid
Dimethylsilandiylbis(2-methyl-4-(4'-tert.-butyl-phenyl)-indenyl)hafniumdichlorid
Dimethylsilandiylbis(2-methyl-4-(4'-tert.-butyl-phenyl)-indenyl)titandichlorid
Dimethylsilandiylbis(2-methyl-4-(4'-methyl-phenyl)-indenyl)zirkoniumdichlorid
Dimethylsilandiylbis(2-methyl-4-(4'-n-propyl-phenyl)-indenyl)zirkoniumdichlorid
Dimethylsilandiylbis(2-methyl-4-(4'-n-butyl-phenyl)-indenyl)zirkoniumdichlorid
Dimethylsilandiylbis(2-methyl-4-(4'-hexyl-phenyl)-indenyl)zirkoniumdichlorid
Dimethylsilandiylbis(2-methyl-4-(4'-sec-butyl-phenyl)-indenyl)zirkoniumdichlorid
Dimethylsilandiylbis(2-ethyl-4-phenyl)-indenyl)zirkoniumdichlorid
Dimethylsilandiylbis(2-ethyl-4-(4'-methyl-phenyl)-indenyl)zirkoniumdichlorid
Dimethylsilandiylbis(2-ethyl-4-(4'-ethyl-phenyl)-indenyl)zirkoniumdichlorid
Dimethylsilandiylbis(2-ethyl-4-(4'-n-propyl-phenyl)-indenyl)zirkoniumdichlorid
Dimethylsilandiylbis(2-ethyl-4-(4'-n-butyl-phenyl)-indenyl)zirkoniumdichlorid
Dimethylsilandiylbis(2-ethyl-4-(4'-hexyl-phenyl)-indenyl)zirkoniumdichlorid
Dimethylsilandiylbis(2-ethyl-4-(4'-pentyl-phenyl)-indenyl)zirkoniumdichlorid
Dimethylsilandiylbis(2-ethyl-4-(4'-cyclohexyl-phenyl)-indenyl)zirkoniumdichlorid
Dimethylsilandiylbis(2-ethyl-4-(4'-sec-butyl-phenyl)-indenyl)zirkoniumdichlorid
Dimethylsilandiylbis(2-ethyl-4-(4'-tert.-butyl-phenyl)-indenyl)zirkoniumdichlorid
Dimethylsilandiylbis(2-n-propyl-4-phenyl)-indenyl)zirkoniumdichlorid
Dimethylsilandiylbis(2-n-propyl-4-(4'-methyl-phenyl)-indenyl)zirkoniumdichlorid
Dimethylsilandiylbis(2-n-propyl-4-(4'-ethyl-phenyl)-indenyl)zirkoniumdichlorid
Dimethylsilandiylbis(2-n-propyl-4-(4'-iso-propyl-phenyl)-indenyl)zirkoniumdichlorid
Dimethylsilandiylbis(2-n-propyl-4-(4'-n-butyl-phenyl)-indenyl)zirkoniumdichlorid
Dimethylsilandiylbis(2-n-propyl-4-(4'-hexyl-phenyl)-indenyl)zirkoniumdichlorid
Dimethylsilandiylbis(2-n-propyl-4-(4'-cyclohexyl-phenyl)-indenyl)zirkoniumdichlorid
Dimethylsilandiylbis(2-n-propyl-4-(4'-sec-butyl-phenyl)-indenyl)zirkoniumdichlorid
Dimethylsilandiylbis(2-n-propyl-4-(4'-tert.-butyl-phenyl)-indenyl)zirkoniumdichlorid
Dimethylsilandiylbis(2-n-butyl-4-phenyl)-indenyl)zirkoniumdichlorid
Dimethylsilandiylbis(2-n-butyl-4-(4'-methyl-phenyl)-indenyl)zirkoniumdichlorid
Dimethylsilandiylbis(2-n-butyl-4-(4'-ethyl-phenyl)-indenyl)zirkoniumdichlorid
Dimethylsilandiylbis(2-n-butyl-4-(4'-n-propyl-phenyl)-indenyl)zirkoniumdichlorid
Dimethylsilandiylbis(2-n-butyl 4-(4'-iso-propyl-phenyl)-indenyl)zirkoniumdichlorid
Dimethylsilandiylbis(2-n-butyl-4-(4'-n-butyl-phenyl)-indenyl)zirkoniumdichlorid
Dimethylsilandiylbis(2-n-butyl-4-(4'-hexyl-phenyl)-indenyl)zirkoniumdichlorid
Dimethylsilandiylbis(2-n-butyl-4-(4'-cyclohexyl-phenyl)-indenyl)zirkoniumdichlorid
Dimethylsilandiylbis(2-n-butyl-4-(4'-sec-butyl-phenyl)-indenyl)zirkoniumdichlorid
Dimethylsilandiylbis(2-n-butyl-4-(4'-tert.-butyl-phenyl)-indenyl)zirkoniumdichlorid
Dimethylsilandiylbis(2-hexyl-4-phenyl)-indenyl)zirkoniumdichlorid
Dimethylsilandiylbis(2-hexyl-4-(4'-methyl-phenyl)-indenyl)zirkoniumdichlorid
Dimethylsilandiylbis(2-hexyl-4-(4'-ethyl-phenyl)-indenyl)zirkoniumdichlorid
Dimethylsilandiylbis(2-hexyl-4-(4'-n-propyl-phenyl)-indenyl)zirkoniumdichlorid
Dimethylsilandiylbis(2-hexyl-4-(4'-iso-propyl-phenyl)-indenyl)zirkoniumdichlorid
Dimethylsilandiylbis(2-hexyl-4-(4'-n-butyl-phenyl)-indenyl)zirkoniumdichlorid
Dimethylsilandiylbis(2-hexyl-4-(4'-hexyl-phenyl)-indenyl)zirkoniumdichlorid
Dimethylsilandiylbis(2-hexyl-4-(4'-cyclohexyl-phenyl)-indenyl)zirkoniumdichlorid
Dimethylsilandiylbis(2-hexyl-4-(4'-sec-butyl-phenyl)-indenyl)zirkoniumdichlorid
Dimethylsilandiylbis(2-hexyl-4-(4'-tert.-butyl-phenyl)-indenyl)zirkoniumdichlorid
Dimethylsilandiylbis(2-methyl-4-(4'-tert.-butyl-phenyl)-indenyl)zirkoniumbis(dimethylamid)
Dimethylsilandiylbis(2-ethyl-4-(4'-tert.-butyl-phenyl)-indenyl)zirkoniumdibenzyl
Dimethylsilandiylbis(2-methyl-4-(4'-tert.-butyl-phenyl)-indenyl)zirkoniumdimethyl
Dimethylgermandiylbis(2-ethyl-4-(4'-tert.-butyl-phenyl)-indenyl)zirkoniumdichlorid
Dimethylgermandiylbis(2-ethyl-4-(4'-tert.-butyl-phenyl)-indenyl)hafniumdichlorid
Dimethylgermandiylbis(2-propyl-4-(4'-tert.-butyl-phenyl)-indenyl)titandichlorid
Dimethylgermandiylbis(2-methyl-4-(4'-tert.-butyl-phenyl)-indenyl)zirkoniumdichlorid
Ethylidenbis(2-ethyl-4-phenyl)-indenyl)zirkoniumdichlorid
Ethylidenbis(2-ethyl-4-(4'-tert.-butyl-phenyl)-indenyl)zirkoniumdichlorid
Ethylidenbis(2-n-propyl-4-(4'-tert.-butyl-phenyl)-indenyl)zirkoniumdichlorid
Ethylidenbis(2-n-butyl-4-(4'-tert.-butyl-phenyl)-indenyl)titandichlorid
Ethylidenbis(2-hexyl-4-(4'-tert.-butyl-phenyl)-indenyl)zirkoniumdibenzyl
Ethylidenbis(2-ethyl-4-(4'-tert.-butyl-phenyl)-indenyl)hafniumdibenzyl
Ethylidenbis(2-methyl-4-(4'-tert.-butyl-phenyl)-indenyl)titandibenzyl
Ethylidenbis(2-methyl-4-(4'-tert.-butyl-phenyl)-indenyl)zirkoniumdichlorid
Ethylidenbis(2-ethyl-4-(4'-tert.-butyl-phenyl)-indenyl)hafniumdimethyl
Ethylidenbis(2-n-propyl-4-phenyl)-indenyl)titandimethyl
Ethylidenbis(2-ethyl-4-(4'-tert.-butyl-phenyl)-indenyl)zirkonium-bis(dimethylamid)
Ethylidenbis(2-ethyl-4-(4'-tert.-butyl-phenyl)-indenyl)hafnium-bis(dimethylamid)
Ethylidenbis(2-ethyl-4-(4'-tert.-butyl-phenyl)-indenyl)titan-bis(dimethylamid)
Methylethylidenbis(2-ethyl-4-(4'-tert.-butyl-phenyl)-indenyl)zirkoniumdichlorid
Methylethylidenbis(2-ethyl-4-(4'-tert.-butyl-phenyl)-indenyl)hafniumdichlorid
Phenylphosphandiyl(2-ethyl-4-(4'-tert.-butyl-phenyl)-indenyl)zirkoniumdichlorid
Phenylphosphandiyl(2-methyl-4-(4'-tert.-butyl-phenyl)-indenyl) zirkoniumdichlorid
Dimethylsilandiyl(2-methyl-4-azapentalen)(2-methyl-4-(4'-methylphenyl-indenyl)zirkoniumdichlorid
Dimethylsilandiyl(2-methyl-5-azapentalen)(2-methyl-4-(4'-methylphenyl-indenyl)zirkoniumdichlorid
Dimethylsilandiyl(2-methyl-6-azapentalen)(2-methyl-4-(4'-methylphenyl-indenyl)zirkoniumdichlorid
Dimethylsilandiyl(2-methyl-N-phenyl-4-azapentalen)(2-methyl-4-(4'-methylphenyl-indenyl)zirkoniumdichlorid
Dimethylsilandiyl(2-methyl-N-phenyl-5-azapentalen)(2-methyl-4-(4'-methylphenyl-indenyl)zirkoniumdichlorid
Dimethylsilandiyl(2-methyl-N-phenyl-6-azapentalen)(2-methyl-4-(4'-methylphenyl-indenyl)zirkoniumdichlorid
Dimethylsilandiyl(2,5-dimethyl-4-azapentalen)(2-methyl-4-(4'-methylphenyl-indenyl)zirkoniumdichlorid
Dimethylsilandiyl(2,5-dimethyl-6-azapentalen)(2-methyl-4-(4'-methylphenyl-indenyl)zirkoniumdichlorid
Dimethylsilandiyl(2,5-dimethyl-N-phenyl-4-azapentalen)(2-methyl-4-(4'-methylphenyl-indenyl)zirkoniumdichlorid
Dimethylsilandiyl(2,5-dimethyl-N-phenyl-6-azapentalen)(2-methyl-4-(4'-methylphenyl-indenyl)zirkoniumdichlorid
Dimethylsilandiyl(2-methyl-4-thiapentalen)(2-methyl-4-(4'-methylphenyl-indenyl)zirkoniumdichlorid
Dimethylsilandiyl(2-methyl-5-thiapentalen)(2-methyl-4-(4'-methylphenyl-indenyl)zirkoniumdichlorid
Dimethylsilandiyl(2-methyl-6-thiapentalen)(2-methyl-4-(4'-methylphenyl-indenyl)zirkoniumdichlorid
Dimethylsilandiyl(2,5-dimethyl-4-thiapentalen)(2-methyl-4-(4'-methylphenyl-indenyl)zirkoniumdichlorid
Dimethylsilandiyl(2,5-dimethyl-6-thiapentalen)(2-methyl-4-(4'-methylphenyl-indenyl)zirkoniumdichlorid
Dimethylsilandiyl(2-methyl-4-oxapentalen)(2-methyl-4-(4'-methylphenyl-indenyl)zirkoniumdichlorid
Dimethylsilandiyl(2-methyl-5-oxapentalen)(2-methyl-4-(4'-methylphenyl-indenyl)zirkoniumdichlorid
Dimethylsilandiyl(2-methyl-6-oxapentalen)(2-methyl-4-(4'-methylphenyl-indenyl)zirkoniumdichlorid
Dimethylsilandiyl(2,5-dimethyl-4-oxapentalen)(2-methyl-4-(4'-methylphenyl-indenyl)zirkoniumdichlorid
Dimethylsilandiyl(2,5-dimethyl-6-oxapentalen)(2-methyl-4-(4'-methylphenyl-indenyl)zirkoniumdichlorid
Dimethylsilandiyl(2-methyl-4-azapentalen)(2-methyl-4-(4'-ethylphenyl-indenyl)zirkoniumdichlorid
Dimethylsilandiyl(2-methyl-5-azapentalen)(2-methyl-4-(4'-ethylphenyl-indenyl)zirkoniumdichlorid
Dimethylsilandiyl(2-methyl-6-azapentalen)(2-methyl-4-(4'-ethylphenyl-indenyl)zirkoniumdichlorid
Dimethylsilandiyl(2-methyl-N-phenyl-4-azapentalen)(2-methyl-4-(4'-ethylphenyl-indenyl)zirkoniumdichlorid
Dimethylsilandiyl(2-methyl-N-phenyl-5-azapentalen)(2-methyl-4-(4'-ethylphenyl-indenyl)zirkoniumdichlorid
Dimethylsilandiyl(2-methyl-N-phenyl-6-azapentalen)(2-methyl-4-(4'-ethylphenyl-indenyl)zirkoniumdichlorid
Dimethylsilandiyl(2,5-dimethyl-4-azapentalen)(2-methyl-4-(4'-ethylphenyl-indenyl)zirkoniumdichlorid
Dimethylsilandiyl(2,5-dimethyl-6-azapentalen)(2-methyl-4-(4'-ethylphenyl-indenyl)zirkoniumdichlorid
Dimethylsilandiyl(2,5-dimethyl-N-phenyl-4-azapentalen)(2-methyl-4-(4'-ethylphenyl-indenyl)zirkoniumdichlorid
Dimethylsilandiyl(2,5-dimethyl-N-phenyl-6-azapentalen)(2-methyl-4-(4'-ethylphenyl-indenyl)zirkoniumdichlorid
Dimethylsilandiyl(2-methyl-4-thiapentalen)(2-methyl-4-(4'-ethylphenyl-indenyl)zirkoniumdichlorid
Dimethylsilandiyl(2-methyl-5-thiapentalen)(2-methyl-4-(4'-ethylphenyl-indenyl)zirkoniumdichlorid
Dimethylsilandiyl(2-methyl-6-thiapentalen)(2-methyl-4-(4'-ethylphenyl-indenyl)zirkoniumdichlorid
Dimethylsilandiyl(2,5-dimethyl-4-thiapentalen)(2-methyl-4-(4'-ethylphenyl-indenyl)zirkoniumdichlorid
Dimethylsilandiyl(2,5-dimethyl-6-thiapentalen)(2-methyl-4-(4'-ethylphenyl-indenyl)zirkoniumdichlorid
Dimethylsilandiyl(2-methyl-4-oxapentalen)(2-methyl-4-(4'-ethylphenyl-indenyl)zirkoniumdichlorid
Dimethylsilandiyl(2-methyl-5-oxapentalen)(2-methyl-4-(4'-ethylphenyl-indenyl)zirkoniumdichlorid
Dimethylsilandiyl(2-methyl-6-oxapentalen)(2-methyl-4-(4'-ethylphenyl-indenyl)zirkoniumdichlorid
Dimethylsilandiyl(2,5-dimethyl-4-oxapentalen)(2-methyl-4-(4'-ethylphenyl-indenyl)zirkoniumdichlorid
Dimethylsilandiyl(2,5-dimethyl-6-oxapentalen)(2-methyl-4-(4'-ethylphenyl-indenyl)zirkoniumdichlorid
Dimethylsilandiyl(2-methyl-4-azapentalen)(2-methyl-4-(4'-n-propylphenyl-indenyl)zirkoniumdichlorid
Dimethylsilandiyl(2-methyl-5-azapentalen)(2-methyl-4-(4'-n-propylphenyl-indenyl)zirkoniumdichlorid
Dimethylsilandiyl(2-methyl-6-azapentalen)(2-methyl-4-(4'-n-propylphenyl-indenyl)zirkoniumdichlorid
Dimethylsilandiyl(2-methyl-N-phenyl-4-azapentalen)(2-methyl-4-(4'-n-propylphenyl-indenyl)zirkoniumdichlorid
Dimethylsilandiyl(2-methyl-N-phenyl-5-azapentalen)(2-methyl-4-(4'-n-propylphenyl-indenyl)zirkoniumdichlorid
Dimethylsilandiyl(2-methyl-N-phenyl-6-azapentalen)(2-methyl-4-(4'-n-propylphenyl-indenyl)zirkoniumdichlorid
Dimethylsilandiyl(2,5-dimethyl-4-azapentalen)(2-methyl-4-(4'-n-propylphenyl-indenyl)zirkoniumdichlorid
Dimethylsilandiyl(2,5-dimethyl-6-azapentalen)(2-methyl-4-(4'-n-propylphenyl-indenyl)zirkoniumdichlorid
Dimethylsilandiyl(2,5-dimethyl-N-phenyl-4-azapentalen)(2-methyl-4-(4'-n-propylphenyl-indenyl)zirkoniumdichlorid
Dimethylsilandiyl (2,5-dimethyl-N-phenyl-6-azapentalen)(2-methyl-4-(4'-n-propylphenyl-indenyl)zirkoniumdichlorid
Dimethylsilandiyl(2-methyl-4-thiapentalen)(2-methyl-4-(4'-n-propylphenyl-indenyl)zirkoniumdichlorid
Dimethylsilandiyl(2-methyl-5-thiapentalen)(2-methyl-4-(4'-n-propylphenyl-indenyl)zirkoniumdichlorid
Dimethylsilandiyl(2-methyl-6-thiapentalen)(2-methyl-4-(4'-n-propylphenyl-indenyl)zirkoniumdichlorid
Dimethylsilandiyl(2,5-dimethyl-4-thiapentalen)(2-methyl-4-(4'-n-propylphenyl-indenyl)zirkoniumdichlorid
Dimethylsilandiyl(2,5-dimethyl-6-thiapentalen)(2-methyl-4-(4'-n-propylphenyl-indenyl)zirkoniumdichlorid
Dimethylsilandiyl(2-methyl-4-oxapentalen)(2-methyl-4-(4'-n-propylphenyl-indenyl)zirkoniumdichlorid
Dimethylsilandiyl(2-methyl-5-oxapentalen)(2-methyl-4-(4'-n-propylphenyl-indenyl)zirkoniumdichlorid
Dimethylsilandiyl(2-methyl-6-oxapentalen)(2-methyl-4-(4'-n-propylphenyl-indenyl)zirkoniumdichlorid
Dimethylsilandiyl(2,5-dimethyl-4-oxapentalen)(2-methyl-4-(4'-n-propylphenyl-indenyl)zirkoniumdichlorid
Dimethylsilandiyl(2,5-dimethyl-6-oxapentalen)(2-methyl-4-(4'-n-propylphenyl-indenyl)zirkoniumdichlorid
Dimethylsilandiyl(2-methyl-4-azapentalen)(2-methyl-4-(4'-isopropylphenyl-indenyl)zirkoniumdichlorid
Dimethylsilandiyl(2-methyl-5-azapentalen)(2-methyl-4-(4'-isopropylphenyl-indenyl)zirkoniumdichlorid
Dimethylsilandiyl(2-methyl-6-azapentalen)(2-methyl-4-(4'-isopropylphenyl-indenyl)zirkoniumdichlorid
Dimethylsilandiyl(2-methyl-N-phenyl-4-azapentalen)(2-methyl-4-(4'-isopropylphenyl-indenyl)zirkoniumdichlorid
Dimethylsilandiyl(2-methyl-N-phenyl-5-azapentalen)(2-methyl-4-(4'-isopropylphenyl-indenyl)zirkoniumdichlorid
Dimethylsilandiyl(2-methyl-N-phenyl-6-azapentalen)(2-methyl-4-(4'-isopropylphenyl-indenyl)zirkoniumdichlorid
Dimethylsilandiyl(2,5-dimethyl-4-azapentalen)(2-methyl-4-(4'-isopropylphenyl-indenyl)zirkoniumdichlorid
Dimethylsilandiyl(2,5-dimethyl-6-azapentalen)(2-methyl-4-(4'-isopropylphenyl-indenyl)zirkoniumdichlorid
Dimethylsilandiyl(2,5-dimethyl-N-phenyl-4-azapentalen)(2-methyl-4-(4'-isopropylphenyl-indenyl)zirkoniumdichlorid
Dimethylsilandiyl(2,5-dimethyl-N-phenyl-6-azapentalen)(2-methyl-4-(4'-isopropylphenyl-indenyl)zirkoniumdichlorid
Dimethylsilandiyl(2-methyl-4-thiapentalen)(2-methyl-4-(4'-isopropylphenyl-indenyl)zirkoniumdichlorid
Dimethylsilandiyl(2-methyl-5-thiapentalen)(2-methyl-4-(4'-isopropylphenyl-indenyl)zirkoniumdichlorid
Dimethylsilandiyl(2-methyl-6-thiapentalen)(2-methyl-4-(4'-isopropylphenyl-indenyl)zirkoniumdichlorid
Dimethylsilandiyl(2,5-dimethyl-4-thiapentalen)(2-methyl-4-(4'-isopropylphenyl-indenyl)zirkoniumdichlorid
Dimethylsilandiyl(2,5-dimethyl-6-thiapentalen)(2-methyl-4-(4'-isopropylphenyl-indenyl)zirkoniumdichlorid
Dimethylsilandiyl(2-methyl-4-oxapentalen)(2-methyl-4-(4'-isopropylphenyl-indenyl)zirkoniumdichlorid
Dimethylsilandiyl(2-methyl-5-oxapentalen)(2-methyl-4-(4'-isopropylphenyl-indenyl)zirkoniumdichlorid
Dimethylsilandiyl(2-methyl-6-oxapentalen)(2-methyl-4-(4'-isopropylphenyl-indenyl)zirkoniumdichlorid
Dimethylsilandiyl(2,5-dimethyl-4-oxapentalen)(2-methyl-4-(4'-isopropylphenyl-indenyl)zirkoniumdichlorid
Dimethylsilandiyl(2,5-dimethyl-6-oxapentalen)(2-methyl-4-(4'-isopropylphenyl-indenyl)zirkoniumdichlorid
Dimethylsilandiyl(2-methyl-4-azapentalen)(2-methyl-4-(4'-n-butylphenyl-indenyl)zirkoniumdichlorid
Dimethylsilandiyl(2-methyl-5-azapentalen)(2-methyl-4-(4'-n-butylphenyl-indenyl)zirkoniumdichlorid
Dimethylsilandiyl(2-methyl-6-azapentalen)(2-methyl-4-(4'-n-butylphenyl-indenyl)zirkoniumdichlorid
Dimethylsilandiyl(2-methyl-N-phenyl-4-azapentalen)(2-methyl-4-(4'-n-butylphenyl-indenyl)zirkoniumdichlorid
Dimethylsilandiyl(2-methyl-N-phenyl-5-azapentalen)(2-methyl-4-(4'-n-butylphenyl-indenyl)zirkoniumdichlorid
Dimethylsilandiyl(2-methyl-N-phenyl-6-azapentalen)(2-methyl-4-(4'-n-butylphenyl-indenyl)zirkoniumdichlorid
Dimethylsilandiyl(2,5-dimethyl-4-azapentalen)(2-methyl-4-(4'-n-butylphenyl-indenyl)zirkoniumdichlorid
Dimethylsilandiyl(2,5-dimethyl-6-azapentalen)(2-methyl-4-(4'-n-butylphenyl-indenyl)zirkoniumdichlorid
Dimethylsilandiyl(2,5-dimethyl-N-phenyl-4-azapentalen)(2-methyl-4-(4'-n-butylphenyl-indenyl)zirkoniumdichlorid
Dimethylsilandiyl(2,5-dimethyl-N-phenyl-6-azapentalen)(2-methyl-4-(4'-n-butylphenyl-indenyl)zirkoniumdichlorid
Dimethylsilandiyl(2-methyl-4-thiapentalen)(2-methyl-4-(4'-n-butylphenyl-indenyl)zirkoniumdichlorid
Dimethylsilandiyl(2-methyl-5-thiapentalen)(2-methyl-4-(4'-n-butylphenyl-indenyl)zirkoniumdichlorid
Dimethylsilandiyl(2-methyl-6-thiapentalen)(2-methyl-4-(4'-n-butylphenyl-indenyl)zirkoniumdichlorid
Dimethylsilandiyl(2,5-dimethyl-4-thiapentalen)(2-methyl-4-(4'-n-butylphenyl-indenyl)zirkoniumdichlorid
Dimethylsilandiyl(2,5-dimethyl-6-thiapentalen)(2-methyl-4-(4'-n-butylphenyl-indenyl)zirkoniumdichlorid
Dimethylsilandiyl(2-methyl-4-oxapentalen)(2-methyl-4-(4'-n-butylphenyl-indenyl)zirkoniumdichlorid
Dimethylsilandiyl(2-methyl-5-oxapentalen)(2-methyl-4-(4'-n-butylphenyl-indenyl)zirkoniumdichlorid
Dimethylsilandiyl(2-methyl-6-oxapentalen)(2-methyl-4-(4'-n-butylphenyl-indenyl)zirkoniumdichlorid
Dimethylsilandiyl(2,5-dimethyl-4-oxapentalen)(2-methyl-4-(4'-n-butylphenyl-indenyl)zirkoniumdichlorid
Dimethylsilandiyl(2,5-dimethyl-6-oxapentalen)(2-methyl-4-(4'-n-butylphenyl-indenyl)zirkoniumdichlorid
Dimethylsilandiyl(2-methyl-4-azapentalen)(2-methyl-4-(4'-s-butylphenyl-indenyl)zirkoniumdichlorid
Dimethylsilandiyl(2-methyl-5-azapentalen)(2-methyl-4-(4'-s-butylphenyl-indenyl)zirkoniumdichlorid
Dimethylsilandiyl(2-methyl-6-azapentalen)(2-methyl-4-(4'-s-butylphenyl-indenyl)zirkoniumdichlorid
Dimethylsilandiyl(2-methyl-N-phenyl-4-azapentalen)(2-methyl-4-(4'-s-butylphenyl-indenyl)zirkoniumdichlorid
Dimethylsilandiyl(2-methyl-N-phenyl-5-azapentalen)(2-methyl-4-(4'-s-butylphenyl-indenyl)zirkoniumdichlorid
Dimethylsilandiyl(2-methyl-N-phenyl-6-azapentalen)(2-methyl-4-(4'-s-butylphenyl-indenyl)zirkoniumdichlorid
Dimethylsilandiyl(2,5-dimethyl-4-azapentalen)(2-methyl-4-(4'-s-butylphenyl-indenyl)zirkoniumdichlorid
Dimethylsilandiyl(2,5-dimethyl-6-azapentalen)(2-methyl-4-(4'-s-butylphenyl-indenyl)zirkoniumdichlorid
Dimethylsilandiyl(2,5-dimethyl-N-phenyl-4-azapentalen)(2-methyl-4-(4'-s-butylphenyl-indenyl)zirkoniumdichlorid
Dimethylsilandiyl(2,5-dimethyl-N-phenyl-6-azapentalen)(2-methyl-4-(4'-s-butylphenyl-indenyl)zirkoniumdichlorid
Dimethylsilandiyl(2-methyl-4-thiapentalen)(2-methyl-4-(4'-s-butylphenyl-indenyl)zirkoniumdichlorid
Dimethylsilandiyl(2-methyl-5-thiapentalen)(2-methyl-4-(4'-s-butylphenyl-indenyl)zirkoniumdichlorid
Dimethylsilandiyl(2-methyl-6-thiapentalen)(2-methyl-4-(4'-s-butylphenyl-indenyl)zirkoniumdichlorid
Dimethylsilandiyl(2,5-dimethyl-4-thiapentalen)(2-methyl-4-(4'-s-butylphenyl-indenyl)zirkoniumdichlorid
Dimethylsilandiyl(2,5-dimethyl-6-thiapentalen)(2-methyl-4-(4'-s-butylphenyl-indenyl)zirkoniumdichlorid
Dimethylsilandiyl(2-methyl-4-oxapentalen)(2-methyl-4-(4'-s-butylphenyl-indenyl)zirkoniumdichlorid
Dimethylsilandiyl(2-methyl-5-oxapentalen)(2-methyl-4-(4'-s-butylphenyl-indenyl)zirkoniumdichlorid
Dimethylsilandiyl(2-methyl-6-oxapentalen)(2-methyl-4-(4'-s-butylphenyl-indenyl)zirkoniumdichlorid
Dimethylsilandiyl(2,5-dimethyl-4-oxapentalen)(2-methyl-4-(4'-s-butylphenyl-indenyl)zirkoniumdichlorid
Dimethylsilandiyl(2,5-dimethyl-6-oxapentalen)(2-methyl-4-(4'-s-butylphenyl-indenyl)zirkoniumdichlorid
Dimethylsilandiyl(2-methyl-4-azapentalen)(2-methyl-4-(4'-tert-butylphenyl-indenyl)zirkoniumdichlorid
Dimethylsilandiyl(2-methyl-5-azapentalen)(2-methyl-4-(4'-tert-butylphenyl-indenyl)zirkoniumdichlorid
Dimethylsilandiyl(2-methyl-6-azapentalen)(2-methyl-4-(4'-tert-butylphenyl-indenyl)zirkoniumdichlorid
Dimethylsilandiyl (2-methyl-N-phenyl-4-azapentalen)(2-methyl-4-(4'-tert-butylphenyl-indenyl)zirkoniumdichlorid
Dimethylsilandiyl(2-methyl-N-phenyl-5-azapentalen)(2-methyl-4-(4'-tert-butylphenyl-indenyl)zirkoniumdichlorid
Dimethylsilandiyl(2-methyl-N-phenyl-6-azapentalen)(2-methyl-4-(4'-tert-butylphenyl-indenyl)zirkoniumdichlorid
Dimethylsilandiyl(2,5-dimethyl-4-azapentalen)(2-methyl-4-(4'-tert-butylphenyl-indenyl)zirkoniumdichlorid
Dimethylsilandiyl(2,5-dimethyl-6-azapentalen)(2-methyl-4-(4'-tert-butylphenyl-indenyl)zirkoniumdichlorid
Dimethylsilandiyl(2,5-dimethyl-N-phenyl-4-azapentalen)(2-methyl-4-(4'-tert-butylphenyl-indenyl)zirkoniumdichlorid
Dimethylsilandiyl(2,5-dimethyl-N-phenyl-6-azapentalen)(2-methyl-4-(4'-tert-butylphenyl-indenyl)zirkoniumdichlorid
Dimethylsilandiyl(2-methyl-4-thiapentalen)(2-methyl-4-(4'-tert-butylphenyl-indenyl)zirkoniumdichlorid
Dimethylsilandiyl(2-methyl-5-thiapentalen)(2-methyl-4-(4'-tert-butylphenyl-indenyl)zirkoniumdichlorid
Dimethylsilandiyl(2-methyl-6-thiapentalen)(2-methyl-4-(4'-tert-butylphenyl-indenyl)zirkoniumdichlorid
Dimethylsilandiyl(2,5-dimethyl-4-thiapentalen)(2-methyl-4-(4'-tert-butylphenyl-indenyl)zirkoniumdichlorid
Dimethylsilandiyl(2,5-dimethyl-6-thiapentalen)(2-methyl-4-(4'-tert-butylphenyl-indenyl)zirkoniumdichlorid
Dimethylsilandiyl(2-methyl-4-oxapentalen)(2-methyl-4-(4'-tert-butylphenyl-indenyl)zirkoniumdichlorid
Dimethylsilandiyl(2-methyl-5-oxapentalen)(2-methyl-4-(4'-tert-butylphenyl-indenyl)zirkoniumdichlorid
Dimethylsilandiyl(2-methyl-6-oxapentalen)(2-methyl-4-(4'-tert-butylphenyl-indenyl)zirkoniumdichlorid
Dimethylsilandiyl(2,5-dimethyl-4-oxapentalen)(2-methyl-4-(4'-tert-butylphenyl-indenyl)zirkoniumdichlorid
Dimethylsilandiyl(2,5-dimethyl-6-oxapentalen)(2-methyl-4-(4'-tert-butylphenyl-indenyl)zirkoniumdichlorid
Dimethylsilandiyl(2-methyl-4-azapentalen)(2-methyl-4-(4'-n-pentylphenyl-indenyl)zirkoniumdichlorid
Dimethylsilandiyl(2-methyl-5-azapentalen)(2-methyl-4-(4'-n-pentylphenyl-indenyl)zirkoniumdichlorid
Dimethylsilandiyl(2-methyl-6-azapentalen)(2-methyl-4-(4'-n-pentylphenyl-indenyl)zirkoniumdichlorid
Dimethylsilandiyl(2-methyl-N-phenyl-4-azapentalen)(2-methyl-4-(4'-n-pentylphenyl-indenyl)zirkoniumdichlorid
Dimethylsilandiyl(2-methyl-N-phenyl-5-azapentalen)(2-methyl-4-(4'-n-pentylphenyl-indenyl)zirkoniumdichlorid
Dimethylsilandiyl(2-methyl-N-phenyl-6-azapentalen)(2-methyl-4-(4'-n-pentylphenyl-indenyl)zirkoniumdichlorid
Dimethylsilandiyl(2,5-dimethyl-4-azapentalen)(2-methyl-4-(4'-n-pentylphenyl-indenyl)zirkoniumdichlorid
Dimethylsilandiyl(2,5-dimethyl-6-azapentalen)(2-methyl-4-(4'-n-pentylphenyl-indenyl)zirkoniumdichlorid
Dimethylsilandiyl(2,5-dimethyl-N-phenyl-4-azapentalen)(2-methyl-4-(4'-n-pentylphenyl-indenyl)zirkoniumdichlorid
Dimethylsilandiyl(2,5-dimethyl-N-phenyl-6-azapentalen)(2-methyl-4-(4'-n-pentylphenyl-indenyl)zirkoniumdichlorid
Dimethylsilandiyl(2-methyl-4-thiapentalen)(2-methyl-4-(4'-n-pentylphenyl-indenyl)zirkoniumdichlorid
Dimethylsilandiyl(2-methyl-5-thiapentalen)(2-methyl-4-(4'-n-pentylphenyl-indenyl)zirkoniumdichlorid
Dimethylsilandiyl(2-methyl-6-thiapentalen)(2-methyl-4-(4'-n-pentylphenyl-indenyl)zirkoniumdichlorid
Dimethylsilandiyl(2,5-dimethyl-4-thiapentalen)(2-methyl-4-(4'-n-pentylphenyl-indenyl)zirkoniumdichlorid
Dimethylsilandiyl(2,5-dimethyl-6-thiapentalen)(2-methyl-4-(4'-n-pentylphenyl-indenyl)zirkoniumdichlorid
Dimethylsilandiyl(2-methyl-4-oxapentalen)(2-methyl-4-(4'-n-pentylphenyl-indenyl)zirkoniumdichlorid
Dimethylsilandiyl(2-methyl-5-oxapentalen)(2-methyl-4-(4'-n-pentylphenyl-indenyl)zirkoniumdichlorid
Dimethylsilandiyl(2-methyl-6-oxapentalen)(2-methyl-4-(4'-n-pentylphenyl-indenyl)zirkoniumdichlorid
Dimethylsilandiyl(2,5-dimethyl-4-oxapentalen)(2-methyl-4-(4'-n-pentylphenyl-indenyl)zirkoniumdichlorid
Dimethylsilandiyl(2,5-dimethyl-6-oxapentalen)(2-methyl-4-(4'-n-pentylphenyl-indenyl)zirkoniumdichlorid
Dimethylsilandiyl(2-methyl-4-azapentalen)(2-methyl-4-(4'-n-hexylphenyl-indenyl)zirkoniumdichlorid
Dimethylsilandiyl(2-methyl-5-azapentalen)(2-methyl-4-(4'-n-hexylphenyl-indenyl)zirkoniumdichlorid
Dimethylsilandiyl(2-methyl-6-azapentalen)(2-methyl-4-(4'-n-hexylphenyl-indenyl)zirkoniumdichlorid
Dimethylsilandiyl(2-methyl-N-phenyl-4-azapentalen)(2-methyl-4-(4'-n-hexylphenyl-indenyl)zirkoniumdichlorid
Dimethylsilandiyl(2-methyl-N-phenyl-5-azapentalen)(2-methyl-4-(4'-n-hexylphenyl-indenyl)zirkoniumdichlorid
Dimethylsilandiyl(2-methyl-N-phenyl-6-azapentalen)(2-methyl-4-(4'-n-hexylphenyl-indenyl)zirkoniumdichlorid
Dimethylsilandiyl(2,5-dimethyl-4-azapentalen)(2-methyl-4-(4'-n-hexylphenyl-indenyl)zirkoniumdichlorid
Dimethylsilandiyl(2,5-dimethyl-6-azapentalen)(2-methyl-4-(4'-n-hexylphenyl-indenyl)zirkoniumdichlorid
Dimethylsilandiyl(2,5-dimethyl-N-phenyl-4-azapentalen)(2-methyl-4-(4'-n-hexylphenyl-indenyl)zirkoniumdichlorid
Dimethylsilandiyl(2,5-dimethyl-N-phenyl-6-azapentalen)(2-methyl-4-(4'-n-hexylphenyl-indenyl)zirkoniumdichlorid
Dimethylsilandiyl(2-methyl-4-thiapentalen)(2-methyl-4-(4'-n-hexylphenyl-indenyl)zirkoniumdichlorid
Dimethylsilandiyl(2-methyl-5-thiapentalen)(2-methyl-4-(4'-n-hexylphenyl-indenyl)zirkoniumdichlorid
Dimethylsilandiyl(2-methyl-6-thiapentalen)(2-methyl-4-(4'-n-hexylphenyl-indenyl)zirkoniumdichlorid
Dimethylsilandiyl(2,5-dimethyl-4-thiapentalen)(2-methyl-4-(4'-n-hexylphenyl-indenyl)zirkoniumdichlorid
Dimethylsilandiyl(2,5-dimethyl-6-thiapentalen)(2-methyl-4-(4'-n-hexylphenyl-indenyl)zirkoniumdichlorid
Dimethylsilandiyl(2-methyl-4-oxapentalen)(2-methyl-4-(4'-n-hexylphenyl-indenyl)zirkoniumdichlorid
Dimethylsilandiyl(2-methyl-5-oxapentalen)(2-methyl-4-(4'-n-hexylphenyl-indenyl)zirkoniumdichlorid
Dimethylsilandiyl(2-methyl-6-oxapentalen)(2-methyl-4-(4'-n-hexylphenyl-indenyl)zirkoniumdichlorid
Dimethylsilandiyl(2,5-dimethyl-4-oxapentalen)(2-methyl-4-(4'-n-hexylphenyl-indenyl)zirkoniumdichlorid
Dimethylsilandiyl(2,5-dimethyl-6-oxapentalen)(2-methyl-4-(4'-n-hexylphenyl-indenyl)zirkoniumdichlorid
Dimethylsilandiyl(2-methyl-4-azapentalen)(2-methyl-4-(4'-cyclohexylphenyl-indenyl)zirkoniumdichlorid
Dimethylsilandiyl(2-methyl-5-azapentalen)(2-methyl-4-(4'-cyclohexylphenyl-indenyl)zirkoniumdichlorid
Dimethylsilandiyl(2-methyl-6-azapentalen)(2-methyl-4-(4'-cyclohexylphenyl-indenyl)zirkoniumdichlorid
Dimethylsilandiyl(2-methyl-N-phenyl-4-azapentalen)(2-methyl-4-(4'-cyclohexylphenyl-indenyl)zirkoniumdichlorid
Dimethylsilandiyl(2-methyl-N-phenyl-5-azapentalen)(2-methyl-4-(4'-cyclohexylphenyl-indenyl)zirkoniumdichlorid
Dimethylsilandiyl(2-methyl-N-phenyl-6-azapentalen)(2-methyl-4-(4'-cyclohexylphenyl-indenyl)zirkoniumdichlorid
Dimethylsilandiyl(2,5-dimethyl-4-azapentalen)(2-methyl-4-(4'-cyclohexylphenyl-indenyl)zirkoniumdichlorid
Dimethylsilandiyl(2,5-dimethyl-6-azapentalen)(2-methyl-4-(4'-cyclohexylphenyl-indenyl)zirkoniumdichlorid
Dimethylsilandiyl(2,5-dimethyl-N-phenyl-4-azapentalen)(2-methyl-4-(4'-cyclohexylphenyl-indenyl)zirkoniumdichlorid
Dimethylsilandiyl(2,5-dimethyl-N-phenyl-6-azapentalen)(2-methyl-4-(4'-cyclohexylphenyl-indenyl)zirkoniumdichlorid
Dimethylsilandiyl(2-methyl-4-thiapentalen)(2-methyl-4-(4'-cyclohexylphenyl-indenyl)zirkoniumdichlorid
Dimethylsilandiyl(2-methyl-5-thiapentalen)(2-methyl-4-(4'-cyclohexylphenyl-indenyl)zirkoniumdichlorid
Dimethylsilandiyl(2-methyl-6-thiapentalen)(2-methyl-4-(4'-cyclohexylphenyl-indenyl)zirkoniumdichlorid
Dimethylsilandiyl(2,5-dimethyl-4-thiapentalen)(2-methyl-4-(4'-cyclohexylphenyl-indenyl)zirkoniumdichlorid
Dimethylsilandiyl(2,5-dimethyl-6-thiapentalen)(2-methyl-4-(4'-cyclohexylphenyl-indenyl)zirkoniumdichlorid
Dimethylsilandiyl(2-methyl-4-oxapentalen)(2-methyl-4-(4'-cyclohexylphenyl-indenyl)zirkoniumdichlorid
Dimethylsilandiyl(2-methyl-5-oxapentalen)(2-methyl-4-(4'-cyclohexylphenyl-indenyl)zirkoniumdichlorid
Dimethylsilandiyl(2-methyl-6-oxapentalen)(2-methyl-4-(4'-cyclohexylphenyl-indenyl)zirkoniumdichlorid
Dimethylsilandiyl(2,5-dimethyl-4-oxapentalen)(2-methyl-4-(4'-cyclohexylphenyl-indenyl)zirkoniumdichlorid
Dimethylsilandiyl(2,5-dimethyl-6-oxapentalen)(2-methyl-4-(4'-cyclohexylphenyl-indenyl)zirkoniumdichlorid
Dimethylsilandiyl(2-methyl-4-azapentalen)(2-methyl-4-(4'-trimethylsilylphenyl-indenyl)zirkoniumdichlorid
Dimethylsilandiyl(2-methyl-5-azapentalen)(2-methyl-4-(4'-trimethylsilylphenyl-indenyl)zirkoniumdichlorid
Dimethylsilandiyl(2-methyl-6-azapentalen)(2-methyl-4-(4'-trimethylsilylphenyl-indenyl)zirkoniumdichlorid
Dimethylsilandiyl(2-methyl-N-phenyl-4-azapentalen)(2-methyl-4-(4'-trimethylsilylphenyl-indenyl)zirkoniumdichlorid
Dimethylsilandiyl(2-methyl-N-phenyl-5-azapentalen)(2-methyl-4-(4'-trimethylsilylphenyl-indenyl)zirkoniumdichlorid
Dimethylsilandiyl(2-methyl-N-phenyl-6-azapentalen)(2-methyl-4-(4'-trimethylsilylphenyl-indenyl)zirkoniumdichlorid
Dimethylsilandiyl(2,5-dimethyl-4-azapentalen)(2-methyl-4-(4'-trimethylsilylphenyl-indenyl)zirkoniumdichlorid
Dimethylsilandiyl (2,5-dimethyl-6-azapentalen)(2-methyl-4-(4'-trimethylsilylphenyl-indenyl)zirkoniumdichlorid
Dimethylsilandiyl(2,5-dimethyl-N-phenyl-4-azapentalen)(2-methyl-4-(4'-trimethylsilylphenyl-indenyl)zirkoniumdichlorid
Dimethylsilandiyl(2,5-dimethyl-N-phenyl-6-azapentalen)(2-methyl-4-(4,-trimethylsilylphenyl-indenyl)zirkoniumdichlorid
Dimethylsilandiyl(2-methyl-4-thiapentalen)(2-methyl-4-(4'-trimethylsilylphenyl-indenyl)zirkoniumdichlorid
Dimethylsilandiyl(2-methyl-5-thiapentalen)(2-methyl-4-(4'-trimethylsilylphenyl-indenyl)zirkoniumdichlorid
Dimethylsilandiyl(2-methyl-6-thiapentalen)(2-methyl-4-(4'-trimethylsilylphenyl-indenyl)zirkoniumdichlorid
Dimethylsilandiyl(2,5-dimethyl-4-thiapentalen)(2-methyl-4-(4'-trimethylsilylphenyl-indenyl)zirkoniumdichlorid
Dimethylsilandiyl(2,5-dimethyl-6-thiapentalen)(2-methyl-4-(4'-trimethylsilylphenyl-indenyl)zirkoniumdichlorid
Dimethylsilandiyl(2-methyl-4-oxapentalen)(2-methyl-4-(4'-trimethylsilylphenyl-indenyl)zirkoniumdichlorid
Dimethylsilandiyl(2-methyl-5-oxapentalen)(2-methyl-4-(4'-trimethylsilylphenyl-indenyl)zirkoniumdichlorid
Dimethylsilandiyl(2-methyl-6-oxapentalen)(2-methyl-4-(4'-trimethylsilylphenyl-indenyl)zirkoniumdichlorid
Dimethylsilandiyl(2,5-dimethyl-4-oxapentalen)(2-methyl-4-(4'-trimethylsilylphenyl-indenyl)zirkoniumdichlorid
Dimethylsilandiyl(2,5-dimethyl-6-oxapentalen)(2-methyl-4-(4'-trimethylsilylphenyl-indenyl)zirkoniumdichlorid
Dimethylsilandiyl(2-methyl-4-azapentalen)(2-methyl-4-(4'-adamantylphenyl-indenyl)zirkoniumdichlorid
Dimethylsilandiyl(2-methyl-5-azapentalen)(2-methyl-4-(4'-adamantylphenyl-indenyl)zirkoniumdichlorid
Dimethylsilandiyl(2-methyl-6-azapentalen)(2-methyl-4-(4'-adamantylphenyl-indenyl)zirkoniumdichlorid
Dimethylsilandiyl(2-methyl-N-phenyl-4-azapentalen)(2-methyl-4-(4'-adamantylphenyl-indenyl)zirkoniumdichlorid
Dimethylsilandiyl(2-methyl-N-phenyl-5-azapentalen)(2-methyl-4-(4'-adamantylphenyl-indenyl)zirkoniumdichlorid
Dimethylsilandiyl(2-methyl-N-phenyl-6-azapentalen)(2-methyl-4-(4'-adamantylphenyl-indenyl)zirkoniumdichlorid
Dimethylsilandiyl(2,5-dimethyl-4-azapentalen)(2-methyl-4-(4'-adamantylphenyl-indenyl)zirkoniumdichlorid
Dimethylsilandiyl(2,5-dimethyl-6-azapentalen)(2-methyl-4-(4'-adamantylphenyl-indenyl)zirkoniumdichlorid
Dimethylsilandiyl(2,5-dimethyl-4-azapentalen)(2-methyl-4-(4'-adamantylphenyl-indenyl)zirkoniumdichlorid
Dimethylsilandiyl(2,5-dimethyl-N-phenyl-4-azapentalen)(2-methyl-4-(4'-adamantylphenyl-indenyl)zirkoniumdichlorid
Dimethylsilandiyl(2,5-dimethyl-N-phenyl-6-azapentalen)(2-methyl-4-(4'-adamantylphenyl-indenyl)zirkoniumdichlorid
Dimethylsilandiyl(2-methyl-4-thiapentalen)(2-methyl-4-(4'-adamantylphenyl-indenyl)zirkoniumdichlorid
Dimethylsilandiyl(2-methyl-5-thiapentalen)(2-methyl-4-(4'-adamantylphenyl-indenyl)zirkoniumdichlorid
Dimethylsilandiyl(2-methyl-6-thiapentalen)(2-methyl-4-(4'-adamantylphenyl-indenyl)zirkoniumdichlorid
Dimethylsilandiyl(2,5-dimethyl-4-thiapentalen)(2-methyl-4-(4'-adamantylphenyl-indenyl)zirkoniumdichlorid
Dimethylsilandiyl(2,5-dimethyl-6-thiapentalen)(2-methyl-4-(4'-adamantylphenyl-indenyl)zirkoniumdichlorid
Dimethylsilandiyl(2-methyl-4-oxapentalen)(2-methyl-4-(4'-adamantylphenyl-indenyl)zirkoniumdichlorid
Dimethylsilandiyl(2-methyl-5-oxapentalen)(2-methyl-4-(4'-adamantylphenyl-indenyl)zirkoniumdichlorid
Dimethylsilandiyl(2-methyl-6-oxapentalen)(2-methyl-4-(4'-adamantylphenyl-indenyl)zirkoniumdichlorid
Dimethylsilandiyl(2,5-dimethyl-4-oxapentalen)(2-methyl-4-(4'-adamantylphenyl-indenyl)zirkoniumdichlorid
Dimethylsilandiyl(2,5-dimethyl-6-oxapentalen)(2-methyl-4-(4'-adamantylphenyl-indenyl)zirkoniumdichlorid
Dimethylsilandiyl(2-methyl-4-azapentalen)(2-methyl-4-(4'-tris(trifluormethyl)methylphenyl-indenyl) zirkoniumdichlorid
Dimethylsilandiyl(2-methyl-5-azapentalen)(2-methyl-4-(4'-tris(trifluormethyl)methylphenyl-indenyl) zirkoniumdichlorid
Dimethylsilandiyl(2-methyl-6-azapentalen)(2-methyl-4-(4'-tris(trifluormethyl)methylphenyl-indenyl) zirkoniumdichlorid
Dimethylsilandiyl(2-methyl-N-phenyl-4-azapentalen)(2-methyl-4-(4'-tris(trifluormethyl)methylphenyl-indenyl) zirkoniumdichlorid
Dimethylsilandiyl(2-methyl-N-phenyl-5-azapentalen)(2-methyl-4-(4'-tris(trifluormethyl)methylphenyl-indenyl) zirkoniumdichlorid
Dimethylsilandiyl(2-methyl-N-phenyl-6-azapentalen)(2-methyl-4-(4'-tris(trifluormethyl)methylphenyl-indenyl zirkoniumdichlorid
Dimethylsilandiyl (2,5-dimethyl-4-azapentalen)(2-methyl-4-(4'-tris(trifluormethyl)methylphenyl-indenyl) zirkoniumdichlorid
Dimethylsilandiyl(2,5-dimethyl-6-azapentalen)(2-methyl-4-(4'-tris(trifluormethyl)methylphenyl-indenyl) zirkoniumdichlorid
Dimethylsilandiyl(2,5-dimethyl-N-phenyl-4-azapentalen)(2-methyl-4-(4'-tris(trifluormethyl)methylphenyl-indenyl) zirkoniumdichlorid
Dimethylsilandiyl(2,5-dimethyl-N-phenyl-6-azapentalen)(2-methyl-4-(4'-tris(trifluormethyl)methylphenyl-indenyl) zirkoniumdichlorid
Dimethylsilandiyl(2-methyl-4-thiapentalen)(2-methyl-4-(4'-tris(trifluormethyl)methylphenyl-indenyl)zirkoniumdichlorid
Dimethylsilandiyl(2-methyl-5-thiapentalen)(2-methyl-4-(4'-tris(trifluormethyl)methylphenyl-indenyl)zirkoniumdichlorid
Dimethylsilandiyl(2-methyl-6-thiapentalen)(2-methyl-4-(4'-tris (trifluormethyl)methylphenyl-indenyl)zirkoniumdichlorid
Dimethylsilandiyl(2,5-dimethyl-4-thiapentalen)(2-methyl-4-(4'-tris(trifluormethyl)methylphenyl-indenyl) zirkoniumdichlorid
Dimethylsilandiyl(2,5-dimethyl-6-thiapentalen)(2-methyl-4-(4'-tris(trifluormethyl)methylphenyl-indenyl) zirkoniumdichlorid
Dimethylsilandiyl(2-methyl-4-oxapentalen)(2-methyl-4-(4'-tris(trifluormethyl)methylphenyl-indenyl)zirkoniumdichlorid
Dimethylsilandiyl(2-methyl-5-oxapentalen)(2-methyl-4-(4'-tris(trifluormethyl)methylphenyl-indenyl)zirkoniumdichlorid
Dimethylsilandiyl(2-methyl-6-oxapentalen)(2-methyl-4-(4'-tris(trifluormethyl)methylphenyl-indenyl)zirkoniumdichlorid
Dimethylsilandiyl(2,5-dimethyl-4-oxapentalen)(2-methyl-4-(4'-tris(trifluormethyl)methylphenyl-indenyl) zirkoniumdichlorid
Dimethylsilandiyl(2,5-dimethyl-6-oxapentalen)(2-methyl-4-(4'-tris(trifluormethyl)methylphenyl-indenyl) zirkoniumdichlorid
Dimethylsilandiyl(2-methyl-4-azapentalen)(2-ethyl-4-(4'-tert-butylphenyl-indenyl)zirkoniumdichlorid
Dimethylsilandiyl(2-methyl-5,6-di-hydro-4-azapentalen)(2-ethyl-4-(4'-tert-butylphenyl-indenyl)zirkoniumdichlorid
Dimethylsilandiyl(2-methyl-4-azapentalen)(2-ethyl-4-(4'-tert-butylphenyl-tetrahydroindenyl)zirkoniumdichlorid
Dimethylsilandiyl(2-methyl-5-azapentalen)(2-n-butyl-4-(4'-tert-butylphenyl-indenyl)zirkoniumdichlorid
Ethyliden(2-methyl-6-azapentalen)(2-methyl-9-(4'-tert-butylphenyl-indenyl)zirkoniumdichlorid
Dimethylsilandiyl(2-methyl-N-trimethylsilyl-4-azapentalen)(2-methyl-4-(4'-tert-butylphenyl-indenyl)zirkoniumdichlorid
Dimethylsilandiyl(2-methyl-N-tolyl-5-azapentalen)(2-n-propyl-4-(4'-tert-butylphenyl-indenyl)zirkoniumdichlorid
Dimethylgermandiyl(2-methyl-N-phenyl-6-azapentalen)(2-methyl-4-(4'-tert-butylphenyl-indenyl)zirkoniumdichlorid
Methylethyliden(2,5-dimethyl-4-azapentalen)(2-methyl-4-(4'-tert-butylphenyl-indenyl)zirkoniumdichlorid
Dimethylsilandiyl(2,5-di-iso-propyl-6-azapentalen)(2-methyl-4-(4'-tert-butylphenyl-indenyl)zirkoniumdichlorid
Dimethylsilandiyl(2,5-dimethyl-N-phenyl-4-azapentalen)(2,6-dimethyl-4-(4'-tert-butylphenyl-indenyl)zirkoniumdichlorid
Dimethylsilandiyl(2,5-dimethyl-N-phenyl-6-azapentalen)(2-methyl-4-(6'-tert-butylnaphthyl-indenyl)zirkoniumdichlorid
Dimethylsilandiyl(2,5-dimethyl-N-phenyl-6-azapentalen)(2-methyl-4-(6'-tert-butylanthracenyl-indenyl)zirkoniumdichlorid
Dimethylsilandiyl(2-methyl-4-phosphapentalen)(2-methyl-4-(4'-tert-butylphenyl-indenyl)zirkoniumdichlorid
Diphenylsilandiyl(2-methyl-5-thiapentalen)(2-methyl-4-(4'-tert-butylphenyl-indenyl)zirkoniumdichlorid
Methylphenylsilandiyl(2-methyl-6-thiapentalen)(2-methyl-4-(4'-tert-butylphenyl-indenyl)zirkoniumdichlorid
Methyliden (2,5-dimethyl-4-thiapentalen)(2-methyl-4-(4'-tert-butylphenyl-indenyl)zirkoniumdichlorid
Dimethylmethyliden(2,5-dimethyl-6-thiapentalen)(2-methyl-4-(4'-tert-butylphenyl-indenyl)zirkoniumdichlorid
Diphenylsilandiyl(2,5-dimethyl-4-oxapentalen)(2-methyl-4-(4'-tert-butylphenyl-indenyl)zirkoniumdichlorid
Diphenylsilandiyl(2,5-dimethyl-6-oxapentalen)(2-methyl-4-(4'-tert-butylphenyl-indenyl)zirkoniumdichlorid
Dimethylsilandiyl(2-methyl-4-azapentalen)(2-methylindenyl) zirkoniumdichlorid
Dimethylsilandiyl(2-methyl-5-azapentalen)(2-methylindenyl) zirkoniumdichlorid
Dimethylsilandiyl(2-methyl-6-azapentalen)(2-methylindenyl) zirkoniumdichlorid
Dimethylsilandiyl(2-methyl-N-phenyl-4-azapentalen)(2-methylindenyl)zirkoniumdichlorid
Dimethylsilandiyl(2-methyl-N-phenyl-5-azapentalen)(2-methylindenyl)zirkoniumdichlorid
Dimethylsilandiyl(2-methyl-N-phenyl-6-azapentalen)(2-methylindenyl)zirkoniumdichlorid
Dimethylsilandiyl(2,5-dimethyl-4-azapentalen)(2-methylindenyl) zirkoniumdichlorid
Dimethylsilandiyl(2,5-dimethyl-6-azapentalen)(2-methylindenyl) zirkoniumdichlorid
Dimethylsilandiyl(2,5-dimethyl-N-phenyl-4-azapentalen)(2-methylindenyl)zirkoniumdichlorid
Dimethylsilandiyl(2,5-dimethyl-N-phenyl-6-azapentalen)(2-methylindenyl)zirkoniumdichlorid
Dimethylsilandiyl(2-methyl-4-thiapentalen)(2-methylindenyl)zirkoniumdichlorid
Dimethylsilandiyl(2-methyl-5-thiapentalen)(2-methylindenyl)zirkoniumdichlorid
Dimethylsilandiyl(2-methyl-6-thiapentalen)(2-methylindenyl)zirkoniumdichlorid
Dimethylsilandiyl(2,5-dimethyl-4-thiapentalen)(2-methylindenyl) zirkoniumdichlorid
Dimethylsilandiyl(2,5-dimethyl-6-thiapentalen)(2-methylindenyl) zirkoniumdichlorid
Dimethylsilandiyl(2-methyl-4-oxapentalen)(2-methylindenyl)zirkoniumdichlorid
Dimethylsilandiyl(2-methyl-5-oxapentalen)(2-methylindenyl)zirkoniumdichlorid
Dimethylsilandiyl(2-methyl-6-oxapentalen)(2-methylindenyl)zirkoniumdichlorid
Dimethylsilandiyl(2,5-dimethyl-4-oxapentalen)(2-methylindenyl) zirkoniumdichlorid
Dimethylsilandiyl(2,5-dimethyl-6-oxapentalen)(2-methylindenyl) zirkoniumdichlorid
Dimethylsilandiyl(2-methyl-4-azapentalen)(indenyl)zirkoniumdichlorid
Dimethylsilandiyl(2-methyl-5-azapentalen)(indenyl)zirkoniumdichlorid
Dimethylsilandiyl(2-methyl-6-azapentalen)(indenyl)zirkoniumdichlorid
Dimethylsilandiyl(2-methyl-N-phenyl-4-azapentalen)(indenyl) zirkoniumdichlorid
Dimethylsilandiyl(2-methyl-N-phenyl-5-azapentalen)(indenyl) zirkoniumdichlorid
Dimethylsilandiyl(2-methyl-N-phenyl-6-azapentalen)(indenyl) zirkoniumdichlorid
Dimethylsilandiyl(2,5-dimethyl-4-azapentalen)(indenyl)zirkoniumdichlorid
Dimethylsilandiyl(2,5-dimethyl-6-azapentalen)(indenyl)zirkoniumdichlorid
Dimethylsilandiyl(2,5-dimethyl-N-phenyl-4-azapentalen)(indenyl) zirkoniumdichlorid
Dimethylsilandiyl(2,5-dimethyl-N-phenyl-6-azapentalen)(indenyl) zirkoniumdichlorid
Dimethylsilandiyl(2-methyl-4-thiapentalen)(indenyl)zirkoniumdichlorid
Dimethylsilandiyl(2-methyl-5-thiapentalen)(indenyl)zirkoniumdichlorid
Dimethylsilandiyl(2-methyl-6-thiapentalen)(indenyl)zirkoniumdichlorid
Dimethylsilandiyl(2,5-dimethyl-4-thiapentalen)(indenyl) zirkoniumdichlorid
Dimethylsilandiyl(2,5-dimethyl-6-thiapentalen)(indenyl). zirkoniumdichlorid
Dimethylsilandiyl(-methyl-4-oxapentalen)(indenyl)zirkoniumdichlorid
Dimethylsilandiyl(2-methyl-5-oxapentalen)(indenyl)zirkoniumdichlorid
Dimethylsilandiyl(2-methyl-6-oxapentalen)(indenyl)zirkoniumdichlorid
Dimethylsilandiyl(2,5-dimethyl-4-oxapentalen)(indenyl)zirkoniumdichlorid
Dimethylsilandiyl(2,5-dimethyl-6-oxapentalen)(indenyl)zirkoniumdichlorid
Dimethylsilandiyl(2-methyl-4-azapentalen)(2-methyl-4-phenyl-indenyl)zirkoniumdichlorid
Dimethylsilandiyl(2-methyl-5-azapentalen)(2-methyl-4-phenyl-indenyl)zirkoniumdichlorid
Dimethylsilandiyl(2-methyl-6-azapentalen)(2-methyl-4-phenyl-indenyl)zirkoniumdichlorid
Dimethylsilandiyl(2-methyl-N-phenyl-4-azapentalen)(2-methyl-4-phenyl-indenyl)zirkoniumdichlorid
Dimethylsilandiyl(2-methyl-N-phenyl-5-azapentalen)(-methyl-4-phenyl-indenyl)zirkoniumdichlorid
Dimethylsilandiyl(2-methyl-N-phenyl-6-azapentalen)(2-methyl-4-phenyl-indenyl)zirkoniumdichlorid
Dimethylsilandiyl(2,5-dimethyl-4-azapentalen)(2-methyl-4-phenylindenyl)zirkoniumdichlorid
Dimethylsilandiyl(2,5-dimethyl-6-azapentalen)(2-methyl-4-phenylindenyl)zirkoniumdichlorid
Dimethylsilandiyl(2,5-dimethyl-N-phenyl-4-azapentalen)(2-methyl-4-phenyl-indenyl)zirkoniumdichlorid
Dimethylsilandiyl(2,5-dimethyl-N-phenyl-6-azapentalen)(2-methyl-4-phenyl-indenyl)zirkoniumdichlorid
Dimethylsilandiyl(2-methyl-4-thiapentalen)(2-methyl-4-phenyl-indenyl)zirkoniumdichlorid
Dimethylsilandiyl(2-methyl-5-thiapentalen)(2-methyl-4-phenyl-indenyl)zirkoniumdichlorid
Dimethylsilandiyl(2-methyl-6-thiapentalen)(2-methyl-4-phenyl-indenyl)zirkoniumdichlorid
Dimethylsilandiyl(2,5-dimethyl-4-thiapentalen)(2-methyl-4-phenylindenyl)zirkoniumdichlorid
Dimethylsilandiyl(2,5-dimethyl-6-thiapentalen)(2-methyl-4-phenylindenyl)zirkoniumdichlorid
Dimethylsilandiyl(2-methyl-4-oxapentalen)(2-methyl-4-phenyl-indenyl)zirkoniumdichlorid
Dimethylsilandiyl(2-methyl-5-oxapentalen)(2-methyl-4-phenyl-indenyl)zirkoniumdichlorid
Dimethylsilandiyl(2-methyl-6-oxapentalen)(2-methyl-4-phenyl-indenyl)zirkoniumdichlorid
Dimethylsilandiyl(2,5-dimethyl-4-oxapentalen)(2-methyl-4-phenylindenyl)zirkoniumdichlorid
Dimethylsilandiyl(2,5-dimethyl-6-oxapentalen)(2-methyl-4-phenylindenyl)zirkoniumdichlorid
Dimethylsilandiyl(2-methyl-4-azapentalen)(2-methyl-4,5-benzo-indenyl)zirkoniumdichlorid
Dimethylsilandiyl(2-methyl-5-azapentalen)(2-methyl-4,5-benzo-indenyl)zirkoniumdichlorid
Dimethylsilandiyl(2-methyl-6-azapentalen)(2-methyl-4,5-benzo-indenyl)zirkoniumdichlorid
Dimethylsilandiyl(2-methyl-N-phenyl-4-azapentalen)(2-methyl-4,5-benzo-indenyl)zirkoniumdichlorid
Dimethylsilandiyl(2-methyl-N-phenyl-5-azapentalen)(2-methyl-4,5-benzo-indenyl)zirkoniumdichlorid
Dimethylsilandiyl(2-methyl-N-phenyl-6-azapentalen)(2-methyl-4,5-benzo-indenyl)zirkoniumdichlorid
Dimethylsilandiyl(2,5-dimethyl-4-azapentalen)(2-methyl-4,5-benzo-indenyl)zirkoniumdichlorid
Dimethylsilandiyl(2,5-dimethyl-6-azapentalen)(2-methyl-4,5-benzo-indenyl)zirkoniumdichlorid
Dimethylsilandiyl(2,5-dimethyl-N-phenyl-4-azapentalen)(2-methyl-4,5-benzo-indenyl)zirkoniumdichlorid
Dimethylsilandiyl(2,5-dimethyl-N-phenyl-6-azapentalen)(2-methyl-4,5-benzo-indenyl)zirkoniumdichlorid
Dimethylsilandiyl(2-methyl-4-thiapentalen)(2-methyl-4,5-benzo-indenyl)zirkoniumdichlorid
Dimethylsilandiyl(2-methyl-5-thiapentalen)(2-methyl-4,5-benzo-indenyl)zirkoniumdichlorid
Dimethylsilandiyl(2-methyl-6-thiapentalen)(2-methyl-4,5-benzo-indenyl)zirkoniumdichlorid
Dimethylsilandiyl(2,5-dimethyl-4-thiapentalen)(2-methyl-4,5-benzo-indenyl)zirkoniumdichlorid
Dimethylsilandiyl(2,5-dimethyl-6-thiapentalen)(2-methyl-4,5-benzo-indenyl)zirkoniumdichlorid
Dimethylsilandiyl(2-methyl-4-oxapentalen)(2-methyl-4,5-benzo-indenyl)zirkoniumdichlorid
Dimethylsilandiyl(2-methyl-5-oxapentalen)(2-methyl-4,5-benzo-indenyl)zirkoniumdichlorid
Dimethylsilandiyl(2-methyl-6-oxapentalen)(2-methyl-4,5-benzo-indenyl)zirkoniumdichlorid
Dimethylsilandiyl(2,5-dimethyl-4-oxapentalen)(2-methyl-4,5-benzo-indenyl)zirkoniumdichlorid
Dimethylsilandiyl(2,5-dimethyl-6-oxapentalen)(2-methyl-4,5-benzo-indenyl)zirkoniumdichlorid
Dimethylsilandiylbis(2-methyl-4-azapentalen)zirkoniumdichlorid
Dimethylsilandiylbis(2-methyl-5-azapentalen)zirkoniumdichlorid
Dimethylsilandiylbis(2-methyl-6-azapentalen)zirkoniumdichlorid
Dimethylsilandiylbis(2-methyl-N-phenyl-4-azapentalen)zirkoniumdichlorid
Dimethylsilandiylbis(2-methyl-N-phenyl-5-azapentalen)zirkoniumdichlorid
Dimethylsilandiylbis(2-methyl-N-phenyl-6-azapentalen)zirkoniumdichlorid
Dimethylsilandiylbis(2,5-dimethyl-4-azapentalen)zirkoniumdichlorid
Dimethylsilandiylbis(2,5-dimethyl-6-azapentalen)zirkoniumdichlorid
Dimethylsilandiylbis(2,5-dimethyl-N-phenyl-4-azapentalen) zirkoniumdichlorid
Dimethylsilandiylbis(2,5-dimethyl-N-phenyl-6-azapentalen) zirkoniumdichlorid
Dimethylsilandiylbis(2-methyl-4-thiapentalen)zirkoniumdichlorid
Dimethylsilandiylbis(2-methyl-5-thiapentalen)zirkoniumdichlorid
Dimethylsilandiylbis(2-methyl-6-thiapentalen)zirkoniumdichlorid
Dimethylsilandiylbis(2,5-dimethyl-4-thiapentalen)zirkoniumdichlorid
Dimethylsilandiylbis(2,5-dimethyl-6-thiapentalen)zirkoniumdichlorid
Dimethylsilandiylbis(2-methyl-4-oxapentalen)zirkoniumdichlorid
Dimethylsilandiylbis(2-methyl-5-oxapentalen)zirkoniumdichlorid
Dimethylsilandiylbis (2-methyl-6-oxapentalen)zirkoniumdichlorid
Dimethylsilandiylbis(2,5-dimethyl-4-oxapentalen)zirkoniumdichlorid
Dimethylsilandiylbis (2,5-dimethyl-6-oxapentalen)zirkoniumdichlorid

Des weiteren sind die Metallocene der obenstehenden Liste, die anstelle von "zirkonium dichlorid" die Gruppen
Zirkonium-monochloro-mono-(2,4-di-tert.-butyl-phenolat)
Zirkonium-monochloro-mono-(2,6-di-tert.-butyl-phenolat)
Zirkonium-monochloro-mono-(3,5-di-tert.-butyl-phenolat)
Zirkonium-monochloro-mono-(2,6-di-sec.-butyl-phenolat)
Zirkonium-monochloro-mono-(2,4-di-methylphenolat)
Zirkonium-monochloro-mono-(2,3-di-methylphenolat)
Zirkonium-monochloro-mono-(2,5-di-methylphenolat)
Zirkonium-monochloro-mono-(2,6-di-methylphenolat)
Zirkonium-monochloro-mono-(3,4-di-methylphenolat)
Zirkonium-monochloro-mono-(3,5-di-methylphenolat)
Zirkonium-monochloro-monophenolat
Zirkonium-monochloro-mono-(2-methylphenolat)
Zirkonium-monochloro-mono-(3-methylphenolat)
Zirkonium-monochloro-mono-(4-methylphenolat)
Zirkonium-monochloro-mono-(2-ethylphenolat)
Zirkonium-monochloro-mono-(3-ethylphenolat)
Zirkonium-monochloro-mono-(4-ethylphenolat)
Zirkonium-monochloro-mono-(2-sec.-butylphenolat)
Zirkonium-monochloro-mono-(2-tert.-butylphenolat)
Zirkonium-monochloro-mono-(3-tert.-butylphenolat)
Zirkonium-monochloro-mono-(4-sec.-butylphenolat)
Zirkonium-monochloro-mono-(4-tert.-butylphenolat)
zirkonium-monochloro-mono-(2-isopropyl-5-methylphenolat)
zirkonium-monochloro-mono-(4-isopropyl-3-methylphenolat)
Zirkonium-monochloro-mono-(5-isopropyl-2-methylphenolat)
Zirkonium-monochloro-mono-(5-isopropyl-3-methylphenolat)
Zirkonium-monochloro-mono-(2,4-bis-(2-methyl-2-butyl)-phenolat)
zirkonium-monochloro-mono-(2,6-di-tert.-butyl-4-methyl-phenolat)
Zirkonium-monochloro-mono-(4-nonylphenolat)
Zirkonium-monochloro-mono-(1-naphtholat)
Zirkonium-monochloro-mono-(2-naphtholat)
Zirkonium-monochloro-mono-(2-phenylphenolat)
Zirkonium-monochloro-mono-(tert. butoxid)
zirkonium-monochloro-mono-(N-methylanilid)
Zirkonium-monochloro-mono-(2-tert.-butylanilid)
zirkonium-monochloro-mono-(tert.-butylamid)
zirkonium-monochloro-mono-(di-iso.-propylamid)
Zirkonium-monochloro-mono-methyl
Zirkonium-monochloro-mono-benzyl
Zirkonium-monochloro-mono-neopentyl, aufweisen, Beispiele für die erfindungsgemäßen Metallocene.

Weiterhin bevorzugt sind die entsprechenden Zirkoniumdimethyl-Verbindungen, die entsprechenden ZirkoniUM-η⁴-Butadien-Verbindungen, sowie die entsprechenden Verbindungen mit 1,2-(1-methylethandiyl)-, 1,2-(1,1-dimethyl-ethandiyl)- und 1,2(1,2-dimethylethandiyl)-Brücke.

Das erfindungsgemäße Katalysatorsystem enthält mindestens eine Verbindung der Formel (IV), die in jedem beliebigen stöchiometrischen Verhältnis mit Verbindungen der Formel (I), (II) oder (III) umgesetzt werden kann.

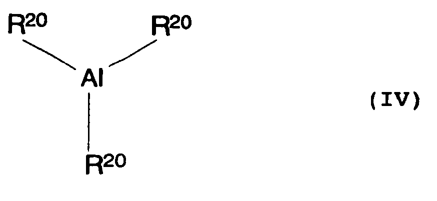

Die Reste R²⁰ in Formel (IV) können gleich oder verschieden sein und ein Halogenatom, ein Wasserstoffatom, C₁-C₂₀-Alkyl, C₁-C₂₀-Halogenalkyl, C₆-C₂₀-Aryl, C₆-C₂₀-Halogenaryl, C₇-C₄₀-Arylalkyl, C₇-C₄₀-Halogenarylalkyl, C₇-C₄₀-Alkylaryl oder C₇-C₄₀-Halogenalkylaryl bedeuten.
Bevorzugt für R²⁰ sind C₁-C₆-Alkyl-Gruppen, besonders bevorzugt für R²⁰ sind C₁-C₄-Alkyl-Gruppen.

Bei der Herstellung des erfindungsgemäßen Katalysatorsystems wird ein Mol-Verhältnis Bor : M² zwischen den Verbindungen der Formeln (I) und/oder (II) und der Formel (III) von 0,01 bis 10000 eingesetzt. Bevorzugt wird ein Mol-Verhältnis von 0.1 bis 1000, ganz besonders bevorzugt wird ein Mol-Verhältnis von 1 bis 100 eingesetzt. Hierzu kann eine Verbindung der Formel (IV) in einem Mol-Verhältnis Al : M² von 0.01 bis 10000 zusätzlich zugegeben werden. Bevorzugt wird ein mol-Verhältnis von 0.1 bis 1000, ganz besonders bevorzugt wird ein Mol-Verhältnis von 1 bis 100 eingesetzt.

Die Verbindungen können in jeder denkbaren Kombination miteinander in Kontakt gebracht werden. Eine mögliche Verfahrensweise ist, daß eine Organoübergangsmetallverbindung der Formel (III) in einem aliphatischen oder aromatischen Lösemittel wie Toluol, Heptan, Tetrahydrofuran oder Diethylether gelöst bzw. suspendiert wird. Danach wird eine Verbindung der Formel (IV) in gelöster bzw. in suspendierter Form zugegeben. Die Reaktionszeit liegt zwischen 1 Minute und 24 Stunden, wobei eine Reaktionszeit zwischen 5 Minuten und 120 Minuten bevorzugt wird. Die Reaktionstemperatur liegt zwischen -10°C und + 200°C, wobei eine Temperatur zwischen 0 °C und 50 °C bevorzugt wird. Im Anschluß daran wird eine Organoborverbindung der Formel (I) oder (II) entweder in Substanz oder in gelöster bzw. in suspendierter Form zugegeben. Die Reaktionszeit liegt zwischen 1 Minute und 24 Stunden, wobei eine Reaktionszeit zwischen 5 Minuten und 120 Minuten bevorzugt wird. Die Reaktionstemperatur liegt zwischen -10 °C und + 200 °C, wobei eine Temperatur zwischen 0 °C und 50 °C bevorzugt wird. Die einzelnen Komponeneten können auch nacheinander, in einer beliebigen Reihenfolge, in den Polymerisationskessel eingegeben werden.

Wahlweise kann das erfindungsgemäße Katalysatorsystem auch geträgert eingesetzt werden. Dazu kann das erfindungsgemäße Katalysatorsystem mit einer Trägerkomponente umgesetzt werden:

Das erfindunggemäße Katalysatorsystems enthält ferner mindestens eine Trägerkomponente C), die ein beliebiger organischer oder anorganischer, inerter Feststoff sein, insbesondere ein poröser Träger wie Talk, anorganische Oxide und feinteilige Polymerpulver (z.B. Polyolefine) sein kann.

Geeignete anorganische Oxide finden sich in den Gruppen 2, 3, 4, 5, 13, 14, 15 und 16 des Periodensystems der Elemente. Beispiele für als Träger bevorzugte Oxide umfassen Siliciumdioxid, Aluminiumoxid, sowie Mischoxide und/oder Mg/Al- Mischoxid der beiden Elemente und entsprechende Oxid-Mischungen. Andere anorganische Oxide, die ällein oder in Kombination mit den zuletzt genannten bevorzugten oxiden Trägern eingesetzt werden können, sind z.B. MgO, ZrO₂, TiO₂ oder B₂O₃, um nur einige zu nennen.

Die verwendeten Trägermaterialien weisen eine spezifische Oberfläche im Bereich von 10 bis 1000 m²/g, ein Porenvolumen im Bereich von 0,1 bis 5 ml/g und eine mittlere Partikelgröße von 1 bis 500 µm auf. Bevorzugt sind Träger mit einer spezifischen Oberfläche im Bereich von 50 bis 500 m²/g, einem Porenvolumen im Bereich zwischen 0,5 und 3,5 ml/g und einer mittleren Partikelgröße im Bereich von 5 bis 350 µm. Besonders bevorzugt sind Träger mit einer spezifischen Oberfläche im Bereich von 200 bis 400 m²/g, einem Porenvolumen im Bereich zwischen 0,8 bis 3,0 ml/g und einer mittleren Partikelgröße von 10 bis 200 µm.

Wenn das verwendete Trägermaterial von Natur aus einen geringen Feuchtigkeitsgehalt oder Restlösemittelgehalt aufweist, kann eine Dehydratisierung oder Trocknung vor der Verwendung unterbleiben. Ist dies nicht der Fall, wie bei dem Einsatz von Silicagel als Trägermaterial, ist eine Dehydratisierung oder Trocknung empfehlenswert. Die thermische Dehydratisierung oder Trocknung des Trägermaterials kann unter Vakuum und gleichzeitiger Inertgas-Überlagerung (z.B. Stickstoff) erfolgen. Die Trocknungstemperatur liegt im Bereich zwischen 100 und 1000 °C, vorzugsweise zwischen 200 und 800 °C. Der Parameter Druck ist in diesem Fall nicht entscheidend. Die Dauer-des Trocknungsprozesses kann zwischen 1 und 24 Stunden betragen. Kürzere oder längere Trocknungsdauern sind möglich, vorausgesetzt, daß unter den gewählten Bedingungen die Gleichgewichtseinstellung mit den Hydroxylgruppen auf der Trägeroberfläche erfolgen kann, was normalerweise zwischen 4 und 8 Stunden erfordert.

Eine Dehydratisierung oder Trocknung des Trägermaterials ist auch auf chemischem Wege möglich, indem das adsorbierte Wasser und die Hydroxylgruppen auf der Oberfläche mit geeigneten Inertisierungsmitteln zur Reaktion gebracht werden. Durch die Umsetzung mit dem Inertisierungsreagenz können die Hydroxylgruppen vollständig oder auch teilweise in eine Form überführt werden, die zu keiner negativen Wechselwirkung mit den katalytisch aktiven Zentren führen. Geeignete Inertisierungsmittel sind beispielsweise Siliciumhalogenide und Silane, wie Siliciumtetrachlorid. Chlortrimethylsilan, Dimethylaminotrichlorsilan oder metallorganische Verbindungen von Aluminium-, Bor und Magnesium wie beispielsweise Trimethylaluminium, Triethylaluminium, Triisobutylaluminium, Triethylboran, Dibutylmagnesium. Die chemische Dehydratisierung oder Inertisierung des Trägermaterials erfolgt beispielsweise dadurch, daß man unter Luft- und Feuchtigkeitsausschluß eine Suspension des Trägermaterials in einem geeigneten Lösemittel mit dem Inertisierungsreagenz in reiner Form oder gelöst in einem geeigneten Lösemittel zur Reaktion bringt. Geeignete Lösemittel sind z.B. aliphatische oder aromatische Kohlenwasserstoffe wie Pentan, Hexan, Heptan, Toluol oder Xylol. Die Inertisierung erfolgt bei Temperaturen zwischen 25°C und 120°C, bevorzugt zwischen 50°C und 70°C. Höhere und niedrigere Temperaturen sind möglich. Die Dauer der Reaktion beträgt zwischen 30 Minuten und 20 Stunden, bevorzugt 1 bis 5 Stunden. Nach dem vollständigen Ablauf der chemischen Dehydratisierung kann das Trägermaterial durch Filtration unter Inertbedingungen isoliert, ein- oder mehrmals mit geeigneten inerten Lösemitteln wie sie bereits zuvor beschrieben worden sind gewaschen und anschließend im Inertgasstrom oder am Vakuum getrocknet.

Organische Trägermaterialien wie feinteilige Polyolefinpulver (z.B. Polyethylen, Polypropylen oder Polystyrol) können auch verwendet werden und sollten ebenfalls vor dem Einsatz von anhaftender Feuchtigkeit, Lösemittelresten oder anderen Verunreinigungen durch entsprechende Reinigungs- und Trocknungsoperationen befreit werden.

Zur Trägerung des erfindungsgemäßen Katalysatorsystems wird die oben hergestellte Katalysatormischung mit einem dehydratisierten oder inertisierten Trägermaterial vermischt, das Lösemittel entfernt und das resultierende geträgerte Metallocen-Katalysatorsystem getrocknet, um sicherzustellen, daß das Lösemittel vollständig oder zum größten Teil aus den Poren des Trägermaterials entfernt wird. Der geträgerte Katalysator wird als frei fließendes Pulver erhalten.

Die vorliegende Erfindung betrifft auch ein Verfahren zur Herstellung eines Polyolefins durch Polymerisation einer oder mehrerer Olefine in Gegenwart des erfindungsgemäßen Katalysatorsystems, enthaltend mindestens eine Übergangsmetallkomponente der Formel (IV). Unter dem Begriff Polymerisaton wird eine Homopolymerisation wie auch eine Copolymerisation verstanden.

Bevorzugt werden Olefine der Formel Rₘ-CH=CH-Rₙ polymerisiert, worin Rₘ und Rₙ gleich oder verschieden sind und ein Wasserstoffatom oder einen kohlenstoffhaltigen Rest mit 1 bis 20 C-Atomen, insbesondere 1 bis 10 C-Atome, bedeuten, und Rₘ und Rₙ zusammen mit den sie verbindenden Atomen einen oder mehrere Ringe bilden können.

Beispiele für solche Olefine sind 1-Olefine mit 2 - 40, vorzugsweise 2 bis 10 Kohlenstoffatomen, wie Ethen, Propen, 1-Buten, 1-Penten, 1-Hexen, 4-Methyl-1-penten oder 1-Octen, Styrol, Diene wie 1,3-Butadien, 1,4-Hexadien, Vinylnorbornen Norbornadien, Ethylnorbornadien und cyclische Olefine wie Norbornen, Tetracyclododecen oder Methylnorbornen. Bevorzugt werden in dem erfindungsgemäßen Verfahren Propen oder Ethen homopolymerisiert, oder Propen mit Ethen und/oder mit einem oder mehreren 1-Olefinen mit 4 bis 20 C-Atomen, wie Hexen, und/oder einem oder mehreren Dienen mit 4 bis 20 C-Atomen, wie 1,4-Butadien, Norbornadien, Ethylidennorbornen oder Ethylnorbornadien, copolymerisiert. Beispiele solcher Copolymere sind Ethen/Propen-Copolymere oder Ethen/Propen/1,4-Hexadien-Terpolymere.

Die Polymerisation wird bei einer Temperatur von -60°C bis 300 °C, bevorzugt 50°C bis 200 °C, ganz besonders bevorzugt 50°C - 80 °C durchgeführt. Der Druck beträgt 0,5 bis 2000 bar, bevorzugt 5 bis 64 bar.

Die Polymerisation kann in Lösung, in Masse, in Suspension oder in der Gasphase, kontinuierlich oder diskontinuierlich, ein- oder mehrstufig durchgeführt werden.

Das geträgerte Katalysatorsystem kann entweder direkt im Polymerisationssystem gebildet werden oder es kann als Pulver oder noch Lösemittel behaftet wieder resuspendiert und als Suspension in einem inerten Suspensionsmittel in das Polymerisationssystem eindosiert werden.

Mit Hilfe des erfindungsgemäßen Katalysatorsystems kann eine Vorpolymerisation erfolgen. Zur Vorpolymerisation wird bevorzugt das (oder eines der) in der Polymerisation eingesetzte(n) Olefin(e) verwendet.

Zur Herstellung von Olefinpolymeren mit breiter Molekulargewichtsverteilung werden bevorzugt Katalysatorsysteme verwendet, die zwei oder mehr verschiedene Übergangsmetallverbindungen, z. B. Metallocene enthalten und/oder zwei oder mehr verschiedene cokatalytisch wirksame Elementorganische Verbindungen.

Zur Entfernung von im Olefin vorhandenen Katalysatorgiften ist eine Reinigung mit einem Aluminiumalkyl, beispielsweise Trimethylaluminium, Triethylaluminium oder Triisobutylaluminium vorteilhaft. Diese Reinigung kann sowohl im Polymerisations-system selbst erfolgen oder das Olefin wird vor der Zugabe in das Polymerisations-system mit der Al-Verbindung in Kontakt gebracht und anschließend wieder getrennt.

Als Molmassenregler und/oder zur Steigerung der Aktivität wird, falls erforderlich, Wasserstoff zugegeben. Der Gesamtdruck im Polymerisationssystem beträgt 0,5 bis 2500 bar, bevorzugt 2 bis 1500 bar.

Dabei wird das erfindungsgemäße Katalysatorsystem in einer Konzentration, bezogen auf das Übergangsmetall von bevorzugt 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet.

Geeignete Lösemittel zur Darstellung sowohl der erfindungsgemäßen geträgerten chemischen Verbindung als auch des erfindungsgemäßen Katalysatorsystems sind aliphatische oder aromatische Lösemittel, wie beispielsweise Hexan öder Toluol, etherische Lösemittel, wie beispielsweise Tetrahydrofuran oder Diethylether oder halogenierte Kohlenwasserstoffe, wie beispielsweise Methylenchlorid oder halogenierte aromatische Kohlenwasserstoffe wie beispielsweise o-Dichlorbenzol.

Vor Zugabe des erfindungsgemäßen Katalysatorsystems bzw. vor Aktivierung des erfindungsgemäßen Katalysatorsystems im Polymerisationssystem kann zusätzlich eine Alkylalumiuniumverbindung wie beispielsweise Trimethylaluminium, Triethylaluminium, Triisobutylaluminium, Trioctylaluminium oder Isoprenylaluminium zur Inertisierung des Polymerisationssystems (beispielsweise zur Abtrennung vorhandener Katalysatorgifte im Olefin) in den Reaktor gegeben werden. Diese wird in einer Konzentration von 200 bis 0,001 mmol A1 pro kg Reaktorinhalt dem Polymerisationssystem zugesetzt. Bevorzugt werden Triisobutylaluminium und Triethylaluminium in einer Konzentration von 10 bis 0,01 mmol A1 pro kg Reaktorinhalt eingesetzt, dadurch kann bei der Synthese eines geträgerten Katalysatorsystems das molare Al/M¹-Verhältnis klein gewählt werden.

Weiterhin kann bei dem erfindungsgemäßen Verfahren ein Additiv wie ein Antistatikum verwendet werden z.B. zur Verbesserung der Kornmorphologie des Olefinpolymers. Generell können alle Antistatika, die für die Polymerisation geeignet sind, verwendet werden. Beispiele hierfür sind Salzgemische aus Calciumsalzen der Medialansäure und Chromsalze der N-Stearylanthranilsäure, die in DE-A-3,543,360 beschreiben werden. Weitere geeignete Antistatika sind z.B. Isopropanol, C₁₂- bis C₂₂- Fettsäureseifen von Alkali- oder Erdalkalimetallen, Salze von Sulfonsäureestern, Ester von Polyethylenglycolen mit Fettsäuren, Polyoxyethylenalkylether usw. Eine Übersicht über Antistatika wird in EP-A-0,107,127 angegeben.

Außerdem kann als Antistatikum eine Mischung aus einem Metallsalz der Medialansäure, einem Metallsalz der Anthranilsäure und einem Polyamin eingesetzt werden, wie in EP-A-0,636,636 beschrieben._ Kommerziell erhältliche Produkte wie Stadis® 450 der Fa. DuPont, eine Mischung aus Toluol, Isopropanol, Dodecylbenzolsulfonsäure, einem Polyamin, einem Copolymer aus Dec-1-en und SO₂ sowie Dec-1-en oder ASA® -3 der Fa. Shell und Atmer 163 der Fa. ICI können ebenfalls verwendet werden.

Vorzugsweise wird das Antistatikum als Lösung eingesetzt, im bevorzugten Fall von Isopropanol, Stadis® 450 und Atmer 163 werden bevorzugt 1 bis 50 Gew.-% dieser Lösung, vorzugsweise 5 bis 25 Gew.-%, bezogen auf die Masse des eingesetzten Trägerkatalysators (Träger mit kovalent fixierter metalloceniumbildende Verbindung und eine oder mehrere Metallocenverbindungen z.B. der Formel X) eingesetzt. Die benötigten Mengen an Antistatikum können jedoch, je nach Art des eingesetzten Antistatikums, in weiten Bereichen schwanken.

Die eigentliche Polymerisation wird vorzugsweise in flüssigen Monomeren (bulk) oder in der Gasphase durchgeführt.

Das Antistatikum kann zu jedem beliebigen Zeitpunkt zur Polymerisation zudosiert werden. Zum Beispiel ist eine bevorzugte Verfahrensweise die, daß das geträgerte Katalysatorsystem in einem organischen Lösemittel, bevorzugt Alkane wie Heptan oder Isododekan, resuspendiert wird. Anschließend wird es unter Rühren in den Polymerisationsautoklav zugegeben. Danach wird das Antistatikum zudosiert. Die Polymerisation wird bei Temperaturen im Bereich von 0 bis 100°C durchgeführt. Eine weitere bevorzugte Verfahrensweise ist, daß das Antistatikum vor Zugabe des geträgerten katalysatorsystems in den Polymerisationsautoklav zudosiert wird. Anschließend wird das resuspendierte geträgerte Katalysatorsystem unter Rühren bei Temperaturen im Bereich von 0 bis 100°C zudosiert. Die Polymerisationszeit kann im Bereich von 0,1 bis 24 Stunden. Bevorzugt ist eine Polymerisationszeit im Bereich von 0,1 bis 5 Stunden.

Bei dem vorstehend beschriebenen Verfahren treten keine Reaktorbeläge auf, es bilden sich keine Agglomerate und die Produktivität des eingesetzten Katalysatorsystems ist hoch. Die mit dem erfindungsgemäßen Verfahren hergestellten Polymere zeichnen sich durch eine enge Molekulargewichtsverteilung und gute Kornmorphologie aus.

Die mit dem erfindungsgemäßen Katalysatorsystem dargestellten Polymere zeigen eine gleichmäßige Kornmorphologie und weisen keine Feinkornanteile auf. Bei der Polymerisation mit dem erfindungsgemäßen Katalysatorsyatem treten keine Beläge oder Verbackungen auf.

Mit dem erfindungsgemäßen Katalysatorsystem werden Polymere, wie Polypropylen mit außerordentlich hoher Stereo- und Regiospezifität erhalten.

Das isotaktische Polypropylen, das mit dem erfindungsgemäßen Katalysatorsystem hergestellt worden ist, zeichnet sich durch einen Anteil an 2-1-insertierten Propeneinheiten RI < 0.5% bei einer Triaden-Taktizität TT > 98.0% und einen Schmelzpunkt > 156°C aus, wobei M_{w}/Mₙ des erfindungsgemäß hergestellten Polypropylens zwischen 2,5 und 3,5 liegt.

Die erfindungsgemäßen Verbindungen der Formel (I) sowie deren Katalysatorsysteme zeichnen sich dadurch aus, daß Ausgangsstoffe nicht krebserregend, erbgutverändernd oder extrem toxisch sind. Die gute Löslichkeit der beschriebenen Ammonium-Tetraphenylborate führt zudem nahezu vollständig umgesetzten Katalysatorsystemen. Dieses Kriterium führt zu starken Kosteneinsparungen und somit zu einer guten wirtschaftlichen Nutzung.

Die nach dem erfindungsgemäßen Verfahren hergestellten Polymere sind insbesondere zur Herstellung reißfester, harter und steifer Formkörper wie Fasern, Filamente, Spritzgußteile, Folien, Platten oder Großhohlkörpern (z.B. Rohre) geeignet.

Die oben allgemein beschriebene und gültige Herstellung eines möglichen Katalysatorsystems kann konkret nach folgender Reihenfolge ablaufen:

In einer ersten Stufe A wird ein anorganisches Trägermaterial wie unter C beschrieben mit einer Metallverbindung der Formel (IV) umgesetzt. Vorzugsweise wird die Metallverbindung der allgemeinen Formel (IV) als Lösung zu einer Suspension des Trägers gegeben. Als Lösungs- bzw. Suspensionsmittel sind die unter B beschriebenen zu verwenden. Die Menge an Metallverbindungen der Formel (IV) kann in weiten Grenzen variieren, die Mindestmenge richtet sich nach der Anzahl der Hydroxygruppen des Trägers. Die Temperatur, Reaktionszeiten und Drücke sind an sich unkritisch, bevorzugt sind die unter B beschriebenen Temperaturen und Reaktionszeiten. Es hat sich als geeignet erwiesen, nach Trägervorbehandlung die überschüssige Metallverbindung der Formel (IV) durch Auswaschen, beispielsweise mit Kohlenwasserstoffen wie Pentan Hexan, Ethylbenzol oder Heptan, zu entfernen und den Träger zu trocknen.

Dieses Material wird nun in einer weiteren Stufe B mit einem Metallkomplex der Formel (III) und einer metalloceniumionbildenden Verbindung umgesetzt. Es können auch Mischungen verschiedener Metallocenkomplexe eingesetzt werden.

Als geeignete metalloceniumionenbildende Verbindungen sind die erfindungesgemäßen Verbindungen der Formel (I) zu verwenden. Die Bedingungen für die Umsetzung des Metallocenkomplexes mit der metallocenniumionenbildenden Verbindung der Formel I sind an sich unkritisch, bevorzugt arbeitet man in Lösung, wobei als Lösungsmittel insbesondere Kohlenwasserstoffe, vorzugsweise aromatische Kohlenwasserstoffe wie Toluol, geeignet sind.

Hierzu wird nun das nach A hergestellte Material gegeben. Eine Menge 0.1 bis 10 Gew.-% an Metallocenkomplexe, bezogen auf das anorganische Trägermaterial ist besonders geeignet. Die Bedingungen für diese Umsetzung sind ebenfalls nicht kritisch, Temperatur im Bereich von 20 bis 80°C und Reaktionszeiten im Bereich von 0.1 bis 20 Stunden haben sich als besonders geeignet erwiesen.

In einer weiteren Stufe C, der Aktivierungsstufe, wird das nach B) erhaltene Material mit einer Metallverbindung der allgemeinen Formel X umgesetzt. Diese Aktvierung kann zu einem beliebigen Zeitpunkt, d. h. vor, bei oder nach der Dosierung des nach B) erhaltenen Materials in den Reaktor, erfolgen. Vorzugsweise erfolgt die Aktivierung nach der Dosierung des nach B) erhaltenen Materials im Reaktor.

Die erfindungsgemäßen Aktivierungsverbindungen zeichnen sich insbesondere durch eine hohe Aktivität aus, sie können lange gelagert werden, sind nicht pyrophor und gut löslich.

Allgemeine Angaben: Herstellung und Handhabung der Verbindungen erfolgten unter Ausschulß von Luft und Feuchtigkeit unter Argonschutz (Schlenk-Technik). Alle benötigten Lösemittel wurden vor Gebrauch durch mehrstündiges Sieden über geeignete Trockenmittel und anschließende Destillation unter Argon absolutiert. Zur Charakterisierung der Verbindungen wurden Proben aus den einzelnen Reaktions-mischungen entnommen und im Ölpumpenvakuum getrocknet.

Die nachfolgenden Beispiele dienen zur Erläuterung der Erfindung

### Beispiel 1: Synthese von N,N-Dimethylcyclohexylammmoniumhydrochlorid

In einem 500ml-Dreihalskolben mit Innenthermometer und Gaseinlaßhahn wurden unter Argon 15,08 g N,N-Dimethylcyclohexylamin und 700 ml Heptan vorgelegt. In dieses Reaktionsgemisch wurde 1 Stunde aus einer Gasentwicklungsappertur HCl-Gas eingeleitet. Das entstandene N, N-Dimethylcyclohexylammoniumhydrochlorid wurde über einer G4-Fritte abgetrennt, mit 100 ml Heptan gewaschen und im Ölpumpenvakuum getrocknet. Man isolierte 19,0 g (98%) des gewünschten Produktes.

### Beispiel 2: Synthese von N,N-Dimethylcyclohexylammoniumtetrakis-(pentafluorophenyl)borat

In einem 1000m1-Vierhalskolben mit Innenthermometer, Rührer und Metallkühler wurde unter Argon eine Lösung aus 20,87 g N,N-Dimethylcyclo-hexylammoniumhydrochlorid gelöst in 300 ml Dichlormethan bei Raumtemperatur zu 111,2 g Lithiumtetrakispentafluorophenylboratetherat zugetropft. Die Reaktionsmischung wurde anschließend 4 Stunden gerührt. Das unlösliche Lithiumchlorid wurde über einer G4-Fritte abgetrennt und zweimal mit insgesamt 100 ml Dichlormethan nachgewaschen. Zu dem Dichlormethan des Filtrats wurden 200 ml Heptan gegeben und das Dichlormethan am Rotationsverdampfer bei 35 °C und 450 mbar vorsichtig entfernt. Der ausfallende Niederschlag wurde über eine G-3-Fritte isoliert und zweimal mit insgesamt 50 ml Heptan gewaschen. Man trocknete das bräunlich kristalline Produkt im Ölpumpenvakuum und isolierte 72,5 g (74%) (Reinheit NMR ca. 90%).
¹⁹F-NMR CDCl₃: -133.2 ppm (m, 8F), -163.3 ppm (m, 4F), -167.3 ppm (m, 8F)

### Beispiel 3: Synthese von N,N-Dimethylbenzylammmoniumhydrochlorid

In einem 500ml-Dreihalskolben mit Innenthermometer und Gaseinlaßhahn wurden unter Argon 12,12 g N,N-Dimethylbenzylamin und 400 ml Heptan vorgelegt. In dieses Reaktionsgemisch wurde 1 Stunde aus einer Gasentwicklungsappertur HCl-Gas eingeleitet. Das entstandene N, N-Dimethylbenzylammoniumhydrochlorid wurde über einer G4-Fritte abgetrennt, mit 100 ml Heptan gewaschen und im Ölpumpenvakuum getrocknet. Man isolierte 13,14 g (85%) des gewünschten Produktes.

### Beispiel 4: Synthese von N,N-Dimethylbenzylammoniumtetrakis-(pentafluorophenyl)borat

In einem 1000ml-Vierhalskolben mit Innenthermometer, Rührer und Metallkühler wurde unter Argon eine Lösung aus 7,75 g N,N-Dimethylbenzylammoniumhydrochlorid gelöst in 116 ml Dichlormethan bei Raumtemperatur zu 39,4 g Lithiumtetrakispentafluorophenylboratetherat zugetropft. Die Reaktionsmischung wurde anschließend 4 Stunden gerührt. Das unlösliche Lithiumchlorid wurde über einer G4-Fritte abgetrennt und zweimal mit insgesamt 100 ml nachgewaschen. Zu dem Dichlormethan des Filtrats wurden 200 ml Heptan gegeben und das Dichlormethan am Rotationsverdampfer bei 35 °c und 450 mbar vorsichtig entfernt. Der ausfallende Niederschlag wurde über eine G-3-Fritte isoliert und zweimal mit insgesamt 25 ml Heptan gewaschen. Man trocknete das bräunlich kristalline Produkt im Ölpumpenvakuum und isolierte 34.51 g (93%)(Reinheit NMR ca. 90%).
¹⁹F-NMR CDCl₃: -133.1 ppm (m, 8F), -163.3 ppm (m, 4F), -167.4 ppm (m, 8F)

### Beispiel 5: Katalysatorherstellung

### a) Herstellung des Trägermaterials

500 g Kieselgel (Typ MS 948, Fa. W.R. Grace, Porenvolumen 1,6 ml/g, 8 h bei ca. 2 mbar und 180°C ausgeheizt) wurden in 4 1 trockenem Heptan unter N2-Atmosphäre suspendiert. Bei Raumtemperatur wurden 2 1 Triiso-butyl-aluminium (2 molar in Heptan, Fa. Witco) so zugegeben, daß die Temperatur der Suspension nicht über 30°C stieg. Anschließend wurde 2 h bei Raumtemperatur nachgerührt, filtriert und der Filterkuchen mit 3 l Heptan gewaschen. Schließlich wurde im Vakuum getrocknet.

### b) Beladung mit Metallocenkomplex

7,9 g des unter a) hergestellten desaktivierten Kieselgels wurden in einem vorher inertisierten Gefäß vorgelegt und in 40 ml trokkenem Toluol suspendiert. Zu dieser Suspension gab man unter Rühren 258 mg Dimethylcyclohexylammoniumtetrakispentafluorophenylborat und 201 mg rac-Dimethylsilandiylbis(2-methyl-4-phenyl-indenyl)zirkoniumdichlorid und erhitzte auf 80°C. Nach 1,5 h Reaktionszeit wurde das Lösungsmittel unter Vakuum abdestilliert. Man erhielt ein tief violettes, frei fließendes Katalysatorpulver.

### Beispiel 6

Es wurde wie in Beispiel 5 vorgegangen, jedoch wurden 235 mg Dimethylsilandiylbis(2-methyl-4-(4'-tert.-butylphenyl)-indenyl)zirkoniumdichlorid verwendet.

### Beispiel 7

Es wurde wie in Beispiel 5 vorgegangen, jedoch wurden 237 mg Dimethylsilandiylbis (2-ethyl-4-(4'-tert.-butyl-phenyl)-indenyl)zirkoniumdichlorid verwendet.

### Beispiel 8

Es wurde wie in Beispiel 5 vorgegangen, jedoch wurden 238 mg Dimethylsilandiylbis(2-n-propyl-4-(4'tert.-butylphenyl)-indenyl)zirkoniumdichlorid verwendet.

### Beispiel 9

Es wurde wie in Beispiel 5 vorgegangen, jedoch wurden 236 mg Dimethylsilandiylbis(2-methyl-4-naphthylindenyl)zirkoniumdichlorid verwendet.

### Beispiel 10

Es wurde wie in Beispiel 5 vorgegangen, jedoch wurden 236 mg Dimethylsilandiyl (2-methyl-4-(4'-tert.-butyl-phenyl)-indenyl) (2-isopropyl-4-(4'-tert.-butyl-phenyl)-indenyl)zirkoniumdichlorid verwendet.

### Beispiel 11: Propylenpolymerisation

In einem mit Stickstoff gespülten 1-1-Stahlautoklav wurden jeweils 0,6 1 flüssiges Propylen bei Raumtemperatur vorgelegt. Über eine Schleuse wurden 4 mmol Tri-iso-butyl-aluminium(2-molare Lösung in Heptan zugegeben. Nach fünf Minuten Rühren wurde ebenfalls über die Schleuse 50 mg des geträgerten Katalysators zugegeben und der Autoklav auf 60°C aufgeheizt. Das Polymerisat fiel in Form eines gut rieselfähigen Grießes an.

Es wurden folgende Ergebnisse erzielt:

**Tabelle 1:**

| Katalysator | Produktivität g PP/g Katalysator | MW (g/mol) | M_{w}/Mₙ | Tm * (°C) |
|---|---|---|---|---|
| Beispiel 5 | 4800 | 801000 | 2,7 | 156,1 |
| Beispiel 6 | 3700 | 453000 | 3,7 | 158,2 |
| Beispiel 7 | 3600 | 368000 | 2,2 | 160,5 |
| Beispiel 8 | 700 | 390000 | 2,7 | 159,1 |
| Beispiel 9 | 1800 | 868000 | 2,3 | 155,0 |
| Beispiel 10 | 2500 | 164000 | 1,9 | 155,5 |

| | | | | |
|---|---|---|---|---|
| * Die Schmelztemperatur Tₘ wurde durch DSC-Messung nach ISO-Norm 3146 mit einem ersten Aufheizen mit einer Aufheizrate von 20°C pro Minute bis 200°C, einer dynamischen Kristallisation mit einer Kühlrate von 20°C pro Minute bis 25°C und einem zweiten Aufheizen mit einer Aufheizrate von 20°C pro Minute wiederum bis 200°C ermittelt. Die Schmelztemperatur ist dann die Temperatur, bei der die beim zweiten Aufheizen gemessene Kurve der Enthalpie gegen die Temperatur das Maximum aufweist. | | | | |

## Patentansprüche

1. Chemische Verbindung der Formel I, 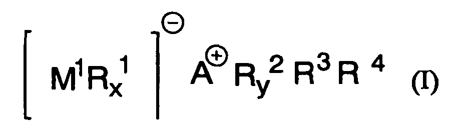 worin
M¹ Bor,
x 4,
y 2 und
A Stickstoff ist,
R¹ gleich oder verschieden ist und C₆-C₄₀-Halogenaryl, C₆-C₄₀-Aryloxy, C₇-C₄₀-Arylalkyl, C₇-C₄₀-Halogenarylalkyl, C₇-C₄₀-Halogenalkylaryl oder C₄-C₄₀-Cycloalkyl bedeutet,
R² gleich oder verschieden ist und C₁-C₆-Alkyl bedeutet,
R³ für C₃-C₉-Cycloalkyl, das mit C₁-C₂₀-Alkyl, C₁-C₂₀-Halogenalkyl, C₁-C₁₀-Alkoxy, C₆-C₄₀-Halogenaryl, C₇-C₄₀-Alkylaryl, C₇-C₄₀-Arylalkyl, C₇-C₄₀-Halogenarylalkyl oder C₇-C₄₀-Halogenalkylaryl substituiert sein kann, oder für C₇-C₂₀-Alkylaryl steht und
R⁴ ein Wasserstoffatom ist.

2. Verbindung gemäß Anspruch 1, **dadurch gekennzeichnet, daß** R³ C₃-C₉-Cycloalkyl oder C₇-Alkylaryl ist.

3. Verbindung gemäß Anspruch 1 oder 2, **dadurch gekennzeichnet, daß** Formel (I) für
N, N-Dimethylcyclohexylammoniumtetrakis(pentafluororphenyl)borat,
N, N-Diethylcyclohexylammoniumtetrakis(pentafluororphenyl)borat,
N, N-Diisopropylcyclohexylammoniumtetrakis(pentafluororphenyl)borat,
N, N-Diethylbenzylammoniumtetrakis(pentafluororphenyl)borat,
N, N-Diisopropylbenzylammoniumtetrakis(pentafluororphenyl)borat,
N, N-Dimethylbenzylammoniumtetrakis(pentafluororphenyl)borat,
steht.

4. Verwendung einer oder mehrerer Verbindung gemäß einem der Ansprüche 1 bis 3 zur Herstellung eines Katalysatorsystems zur Polymerisation von einem oder mehreren Olefinen.

5. Katalysatorsystem enthaltend
A) mindestens eine Organometallübergangsverbindung,
B) mindestens eine Verbindung der Formel (IV) 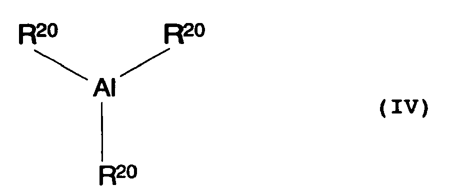 wobei die Reste R²⁰ in Formel (IV) gleich oder verschieden sein können und ein Halogenatom, ein Wasserstoffatom, C₁-C₂₀-Alkyl, C₁-C₂₀-Halogenalkyl, C₆-C₂₀-Aryl, C₆-C₂₀-Halogenaryl, C₇-C₄₀-Arylalkyl, C₇-C₄₀-Halogenarylalkyl, C₇-C₄₀-Alkylaryl oder C₇-C₄₀-Halogenalkylaryl bedeuten,
C) mindestens eine Trägerkomponente und
D) mindestens eine Verbindung gemäß einem der Ansprüche 1 bis 3.

6. Katalysatorsystem gemäß Anspruch 5, **dadurch gekennzeichnet, daß** als Organometallübergangsverbindung mindestens eine Metallocenverbindung eingesetzt werden.

7. Verwendung eines Katalysatorsystems gemäß Anspruch 5 oder 6 zur Herstellung eines Polyolefins.

8. Verfahren zur Herstellung eines Polyolefins durch Polymerisation eines oder mehrer Olefine in Gegenwart eines Katalysatorsystems gemäß Anspruch 5 oder 6.

## Claims

1. A chemical compound of the formula I, 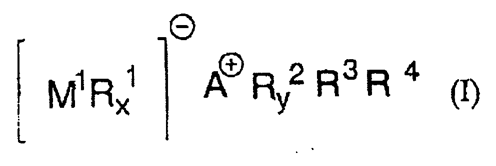 where
M¹ is boron,
x is 4,
y is 2 and
A is nitrogen
R¹ are identical or different and are each C₆-C₄₀₋haloaryl, C₆-C₄₀-aryloxy, C₇-C₄₀-arylalkyl, C₇-C₄₀₋haloarylalkyl, C₇-C₄₀-haloalkylaryl or C₄-C₄₀-cycloalkyl,
R² are identical or different and are each C₁-C₆₋alkyl,
R³ is C₃-C₉-cycloalkyl which may be substituted by C₁₋C₂₀-alkyl, C₁-C₂₀-haloalkyl, C₁-C₁₀-alkoxy, C₆-C₄₀₋haloaryl, C₇-C₄₀-alkylaryl, C₇-C₄₀-arylalkyl, C₇-C₄₀₋haloarylalkyl or C₇-C₄₀-haloalkylaryl, or is C₇-C₂₀₋alkylaryl and
R⁴ is a hydrogen atom.

2. The compound according to claim 1, wherein R³ is C₃-C₉-cycloalkyl or C₇-alkylaryl.

3. The compound of the formula I according to claim 1 or 2 which is
N,N-dimethylcyclohexylammonium tetrakis(pentafluorophenyl)borate,
N,N-diethylcyclohexylammonium tetrakis(pentafluorophenyl)borate,
N,N-diisopropylcyclohexylammonium tetrakis(pentafluorophenyl)borate,
N,N-diethylbenzylammonium tetrakis(pentafluorophenyl)borate,
N,N-diisopropylbenzylammonium tetrakis(pentafluorophenyl)borate or
N,N-dimethylbenzylammonium tetrakis(pentafluorophenyl)borate.

4. The use of one or more compounds according to any of claims 1 to 3 for preparing a catalyst system for the polymerization of one or more olefins.

5. A catalyst system comprising
A) at least one organometallic transition metal compound,
B) at least one compound of the formula (IV), 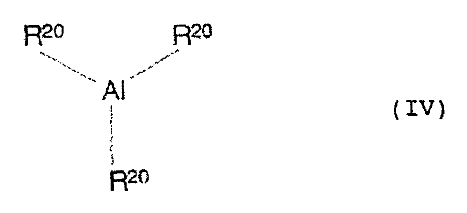 where the radicals R²⁰ in the formula (IV) may be identical or different and are each a halogen atom, a hydrogen atom, C₁-C₂₀-alkyl, C₁-C₂₀-haloalkyl, C₆-C₂₀₋aryl, C₆-C₂₀-haloaryl, C₇-C₄₀-arylalkyl, C₇-C₄₀₋haloarylalkyl, C₇-C₄₀-alkylaryl or C₇-C₄₀-haloalkylaryl,
C) at least one support component and
D) at least one compound according to any of claims 1 to 3.

6. The catalyst system according to claim 5, wherein at least one metallocene compound is used as organometallic transition metal compound.

7. The use of a catalyst system according to claim 5 or 6 for preparing a polyolefin.

8. A process for preparing a polyolefin by polymerization of one or more olefins in the presence of a catalyst system according to claim 5 or 6.

## Revendications

1. Composé chimique de formule I,
[M¹R¹ₓ] ^{⊖}A^{⊕}R_{y}²R³R⁴ (I)
dans laquelle
M¹ représente un atome de bore,
X vaut 4,
Y vaut 2 et
A est un atome d'azote,
R¹ est identique ou différent et est un groupe halogéno-aryle en C₆ à C₄₀, aryloxy en C₆ à C₄₀, arylalkyle en C₇ à C₄₀, halogéno-arylalyle en C₇ à C₄₀, halogéno-alkylaryle en C₇ à C₄₀ ou cycloalkyle en C₄ à C₄₀,
R² est identique ou différent et est un groupe alkyle en C₁ à C₆,
R³ est un groupe cycloalkyle en C₃ à C₉ qui peut être substitué par un groupe alkyle en C₁ à C₂₀, halogéno-alkyle en C₁ à C₂₀, alcoxy en C₁ à C₁₀, halogéno-aryle en C₆ à C₄₀, alkylaryle en C₇ à C₄₀, arylalkyle en C₇ à C₄₀, halogéno-arylakyle en C₇ à C₄₀ ou halogéno-alkylaryle en C₇ à C₄₀ ou est un groupe alkylaryle en C₇ à C₂₀, et
R⁴ est un atome d'hydrogène.

2. Composé selon la revendication 1, **caractérisé en ce que** R³ est un groupe cycloalkyle en C₃ à C₉ ou alkylaryle en C₇.

3. Composé selon la revendication 1 ou 2, **caractérisé en ce que** la formule (I) désigne
le N,N-diméthylcyclohexylammoniumtétrakis(pentafluorophényl)borate,
le N,N-diéthylcyclohexylammoniumtétrakis(pentafluorophényl)borate,
le N,N-diisopropylcyclohexylammoniumtétrakis(pentafluorophényl)borate,
le N,N-diéthylbenzylammoniumtétrakis(pentafluorophényl)-borate,
le N,N-diisopropylbenzylammoniumtétrakis(pentafluorophényl)borate,
le N,N-diméthylbenzylammoniumtétrakis(pentafluorophényl)-borate.

4. Utilisation d'un ou de plusieurs composés selon l'une quelconque des revendications 1 à 3, pour la production d'un système de catalyseur pour la polymérisation d'une ou de plusieurs oléfines.

5. Système de catalyseur contenant
A) au moins un composé de transition organométallique,
B) au moins un composé de formule (IV), 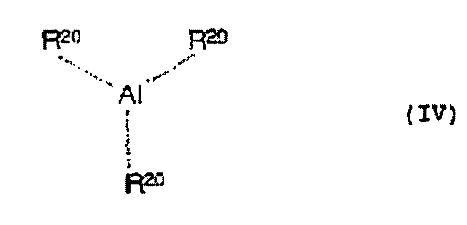 le radical R²⁰ de la formule (IV) pouvant être identique ou différent et désignant un atome d'halogène, un atome d'hydrogène, un groupe alkyle en C₁ à C₂₀, halogéno-alkyle en C₁ à C₂₀, aryle en C₆ à C₂₀, halogéno-aryle en C₆ à C₂₀, arylakyle en C₇ à C₄₀, halogéno-arylalkyle en C₇ à C₄₀, arylakyle en C₇ à C₄₀ ou halogénoalkylaryle en C₇ à C₄₀,
C) au moins un composant de support, et
D) au moins un composé selon l'une quelconque des revendications 1 à 3.

6. Système de catalyseur selon la revendication 5, **caractérisé en ce que** l'on utilise comme composé organométallique, au moins un composé métallocène.

7. Utilisation d'un système de catalyseur selon la revendication 5 ou 6 pour la production d'une polyoléfine.

8. Procédé de production d'une polyoléfine par polymérisation d'une ou de plusieurs oléfines en présence d'un système de catalyseur selon la revendication 5 ou 6.
